# EUROPEAN PATENT APPLICATION

(11) **EP 1 547 750 A1**
(43) Date of publication of application: **29.06.2005**
(21) Application number: 03797728.7
(22) Date of filing: 22.09.2003
(51) Int. Cl.: B29C 47/00, B29C 55/28, B32B 27/36

(54) **METHOD AND APPARATUS FOR PRODUCING POLYBUTYLENE TEREPHTHALATE FILM, AND SHAPE-MEMORY POLYBUTYLENE TEREPHTHALATE LAMINATED FILM**

(30) Priority: 20.09.2002 JP 2002275939; 07.01.2003 JP 2003001533; 07.01.2003 JP 2003001534; 25.04.2003 JP 2003122785
(71) Applicant: Kagawa, Seiji, Koshigaya-shi, Saitama 343-0807 (JP)
(72) Inventor: Kagawa, Seiji, Koshigaya-shi, Saitama 343-0807 (JP)
(74) Representative: Strehl Schübel-Hopf & Partner
(86) International application number: PCT/JP2003/012103
(87) International publication number: WO 2004/026558

(57) **Abstract**

A method for producing a polybutylene terephthalate film by an air-cooled inflation method of inflating a tube of a molten polybutylene terephthalate resin extruded from an annular die by the injection of air, the resin-extruding pressure being 8.3 to 13.7 MPa, and the resin-extruding temperature being a temperature ranging from the melting point of the polybutylene terephthalate resin - 15°C to the melting point - 5°C.

## Description

### FIELD OF THE INVENTION

The present invention relates to a method and an apparatus for producing a thin polybutylene terephthalate film having excellent thickness uniformity, thermal shrinkage resistance and mechanical strength, and a shape-memory polybutylene terephthalate laminate film comprising such a polybutylene terephthalate film useful for wrapping sheets.

### BACKGROUND OF THE INVENTION

Because a polybutylene terephthalate (PBT) resin has excellent mechanical strength, heat resistance, chemical resistance, shock resistance, electric properties, etc., it has conventionally been attracting attention as an engineering plastic, and used as extrusion moldings for automobile parts, electric and electronic parts, etc. Because PBT also has excellent gas barrier and odor retention, thin PBT films or film laminates comprising the PBT film having excellent thickness uniformity and thermal shrinkage resistance would be useful for wrapping sheets. However, PBT is disadvantageous in that (a) when oriented, for instance, in a longitudinal direction after crystallization, it cannot subsequently be oriented in a transverse direction, that (b) it cannot be subjected to rapid orientation because of a low melt tension, and that (c) a PBT film is likely to have wrinkles because its glass transition temperature is close to room temperature. Accordingly, it is extremely difficult to form a polybutylene terephthalate resin into a smooth wrapping film having a uniform thickness of about 10 to 30 µm.

As a method for producing a PBT film by subjecting an unoriented film produced by a T-die method to biaxial orientation, JP 49-80178 A proposes a method for orienting an unoriented film in two directions simultaneously at a predetermined temperature. JP 51-40904 B and JP 51-146572 A propose methods for subjecting an unoriented film to sequential biaxial orientation at predetermined temperature and speed. However, these methods have complicated working steps because an unoriented films produced by rapidly cooling a molten polybutylene terephthalate resin are subjected to biaxial orientation, resulting in films with large thermal shrinkage ratios. To facilitate the biaxial orientation of a polybutylene terephthalate film, methods of laminating it with another resin film, methods of blending it with well-compatible resins such as polyethylene and polypropylene, etc. have been proposed. However, any method has difficulty in forming as thin films as about 10 to 30 µm optimum for wrapping films.

An inflation method generally has higher productivity and thus is more suitable for the production of thin films than the T-die method. However, polybutylene terephthalate films produced by the inflation method disadvantageously have large thickness unevenness and thermal shrinkage. For instance, JP 7-33048 B proposes a method for forming a PBT resin having an intrinsic viscosity of 1.0 or more into a film by an inflation method under the condition that the resin-extruding temperature meets the formula of melting point (°C) < resin-extruding temperature (°C) < melting point - 26 + 53 x intrinsic viscosity (°C). However, in this method, a combination of a blow-up ratio, a resin-extruding temperature and a resin-extruding pressure are not optimized, and the resultant PBT film has a relatively large thermal shrinkage ratio.

PBT is one of polyesters, and another typical polyester is polyethylene terephthalate (PET). Because the PET film has such properties as steam barrier, thermal dimensional stability, filling machine adaptability (no curling), etc., laminate films comprising the PET film are used as lid sheets for containers of instant food. However, because the PET film has large toughness, it fails to be kept in an open state (poor in dead-folding characteristics). Accordingly, the lid is easily closed after opening, making it difficult to pour hot water into the container.

It is required that a laminate film constituting a lid sheet used for containers of instant noodle, etc. is not curled when sealed to the container, and that it keeps a curled state when peeled from the container (having dead-folding characteristics). Because the lid sheet is usually heat-sealed to the container, it would be extremely useful, if it had a shape memory that it is not curled before heat sealing and returns to a curled shape by heat sealing.

However, no package sheets formed by shape-memory laminate films have been known so far. Shape-memory resins are generally subjected to large modulus change before and after their glass transition temperatures. A shape memory mechanism comprises, for instance, (1) forming a shape memory article having an arbitrary shape M, heating it in a state of the shape M for crystallization (entanglement of crystal portions) or intermolecular cross-linking to generate fixing points for shape memory; (2) applying an external force thereto at a temperature equal to or higher than a glass transition temperature and lower than the above heating temperature to cause deformation to a shape N, and making its temperature lower than the glass transition temperature without changing the shape, thereby fixing it to the shape N; and (3) heating it to the glass transition temperature or higher, thereby recovering the shape M without applying an external force. Though the PET has shape-memory characteristics, it has too high a shape recovery temperature because of the glass transition temperature of about 70 to 80°C.

Because PBT has a glass transition temperature of about 20 to 45°C, its shape-memory characteristics at practical temperatures would be utilized if possible to use as package sheets. For instance, JP 2-123129 A discloses a shape-memory resin composed of a block copolymer of PBT and aliphatic polylactone. JP 2-269735 A discloses shape-memory copolyester moldings composed of polyethylene terephthalate copolymerized with a third component to have a crystal-melting entropy of 3 cal/g or less. JP 2-240135 A discloses a shape-memory resin composed of a block copolymer of PBT and polyethylene glycol. However, any of these references fails to teach films of shape-memory PBT resins.

### OBJECT OF THE INVENTION

Accordingly, an object of the present invention is to provide a method for producing a polybutylene terephthalate film, which is thin and excellent in the uniformity of film thickness, thermal shrinkage resistance and mechanical strength.

Another object of the present invention is to provide an apparatus for producing a polybutylene terephthalate film, which is thin and excellent in the uniformity of film thickness, thermal shrinkage resistance and mechanical strength.

A further object of the present invention is to provide a polybutylene terephthalate laminate film having excellent shape memory and thermal dimensional stability.

### SUMMARY OF THE INVENTION

As a result of intensive research in view of the above objects, the inventor has made the following findings:
(a) A thin polybutylene terephthalate (PBT) film having excellent thickness uniformity, thermal shrinkage resistance and mechanical strength can be produced by an air-cooled inflation method, under the conditions that the resin-extruding temperature is the melting point of the PBT resin - 15°C to the melting point - 5°C, and that the resin-extruding pressure is 8.3 to 13.7 MPa,
(b) A PBT laminate film having excellent shape memory and thermal dimension stability can be obtained by (1) subjecting a laminate film of the above PBT film and another film or film laminate to a shaping treatment while keeping a first shape, at a temperature T₁ equal to or lower than the glass transition temperature Tg of the PBT film, (2) deforming the resultant shaped laminate to a second shape at a temperature T₂ more than Tg, and (3) cooling it to a temperature T₃ equal to or lower than Tg.
(c) A PBT laminate film having excellent shape memory and thermal dimension stability can be obtained by (1) (i) producing a laminate film of the above PBT film and another film or film laminate in advance, and subjecting it to a shaping treatment while keeping a first shape at a temperature T₄ higher than Tg and lower than the melting point, or (ii) subjecting the above PBT film to a shaping treatment at the temperature T₄ while keeping a first shape and then laminating it with another film or film laminate to produce a laminate film having a first shape, (2) fixing the resultant shaped laminate to a first shape by cooling it to a temperature T₅ equal to or lower than Tg, (3) deforming the shaped laminate to a second shape at a temperature T₆ higher than the Tg and lower than the temperature T₄, and then (4) fixing it to a second shape by cooling it to a temperature T₇ equal to or lower than Tg.

The present invention has been completed based on such findings.

Thus, the method for producing a polybutylene terephthalate film according to the present invention comprises inflating a tube of a molten polybutylene terephthalate resin extruded from an annular die by the injection of air by an air-cooled inflation method, the resin-extruding temperature being the melting point of the polybutylene terephthalate resin - 15°C to the melting point - 5°C, and the resin-extruding pressure being 8.3 to 13.7 MPa.

The intrinsic viscosity of the polybutylene terephthalate resin is preferably 0.8 to 1.5. The die preferably has a gap of 0.8 to 1.2 mm and a diameter of 120 to 250 mm. The blow-up ratio is preferably 2.0 to 4.0, so that the bubble can be subjected to well-balanced orientation both in a longitudinal direction and in a transverse direction.

The method for producing a polybutylene terephthalate film according to the present invention preferably comprises the steps of (1) ejecting a warm air from a first hot-air-blowing means disposed near the annular die to slowly cool a neck portion of the bubble to a temperature ranging from the melting point - 40°C to the melting point - 25°C; (2) ejecting a warm air from a second hot-air-blowing means disposed above the first hot-air-blowing means to slowly cool an inflating portion of the bubble to a temperature ranging from the melting point - 70°C to the melting point - 40°C; (3) ejecting a warm air from a third hot-air-blowing means disposed above the second hot-air-blowing means to slowly cool a frost line region of the bubble to a temperature ranging from the melting point - 130°C to the melting point - 90°C; (4) isolating the bubble region from an external atmosphere by a partition disposed with a gap around a bubble region above the frost line, to cause the warm air ejected from the first to third hot-air-blowing means to flow upward along an outer surface of the bubble region.

The partition is preferably provided with pluralities of warm air exits, and a rectifying plate is preferably disposed inside the partition to rectify the warm air ejected from the first to third hot-air-blowing means. The inflating portion of the bubble is slowly cooled by the warm air ejected from the second hot-air-blowing means, while being kept amorphous. To keep the bubble region at a temperature ranging from the glass transition temperature Tg of the polybutylene terephthalate resin to Tg + 65°C, the partition is preferably provided with a heating means.

To prevent the lateral vibration of the bubble, the bubble region is preferably surrounded by a cylindrical net. The temperature of the warm air ejected from the first and second hot-air-blowing means is preferably 25 to 50°C. The temperature of the warm air ejected from the third hot-air-blowing means is preferably from the glass transition temperature Tg of the polybutylene terephthalate resin to Tg + 65°C.

The film of the present invention obtained by an air-cooled inflation method has a crystallinity of 35 to 40%, and a thermal shrinkage ratio of 0.4% or less in a longitudinal direction and in a transverse direction.

The air-cooled inflation film may further be subjected to monoaxial or biaxial cold orientation to improve the thickness uniformity and the transparency. The cold orientation is preferably conducted at a temperature of the glass transition temperature Tg of the polybutylene terephthalate resin to Tg + 60°C. The formation of the tubular film by an air-cooled inflation method and the monoaxial or biaxial cold orientation are preferably conducted continuously. The tubular film may be subjected to monoaxial or biaxial cold orientation after bisected. The formation of the tubular film by an air-cooled inflation method, the bisection of the tubular film, and the monoaxial or biaxial cold orientation are preferably conducted continuously.

The apparatus for producing a polybutylene terephthalate film according to the present invention comprises (a) an annular die for extruding a molten polybutylene terephthalate resin in a tubular shape; (b) a means for injecting air into the resultant polybutylene terephthalate tube to form a bubble; (c) a first hot-air-blowing means disposed near the annular die for slowly cooling a neck portion of the bubble; (d) a second hot-air-blowing means disposed above the first hot-air-blowing means for slowly cooling an inflating portion of the bubble; (e) a third hot-air-blowing means disposed above the second hot-air-blowing means for slowly cooling a frost line region of the bubble; and (f) a partition disposed above the third hot-air-blowing means and around a bubble region above the frost line for isolating the bubble region from an ambient atmosphere, and for causing the warm air ejected from the first to third hot-air-blowing means to flow upward along an outer surface of the bubble region, the partition being provided with pluralities of warm air exits.

In the production apparatus of present invention, a rectifying plate is disposed inside the partition. To prevent the lateral vibration of the bubble, a cylindrical net surrounding the bubble region is preferably disposed inside the partition. An inflating portion of the bubble is preferably slowly cooled in an amorphous state by the warm air ejected from the second hot-air-blowing means. The apparatus further comprises a means for cold-orienting the resultant air-cooled inflation film.

The air-cooled inflation means comprising the annular die, the air-injecting means, the first hot-air-blowing means, the second hot-air-blowing means, the third hot-air-blowing means and the partition, and the cold orientation means are preferably continuously disposed along the flow of the air-cooled inflation film.

The production apparatus of the present invention preferably comprises nip rolls for taking off the tubular film formed by the air-cooled inflation means, and further (a) a means for controlling the edge positions of the flattened tubular film taken off by the nip rolls, and (b) a cutting means for bisecting the tubular film with controlled edge positions between the air-cooled inflation means and the cold orientation means, the air-cooled inflation means, the edge position control unit, the cutting means and the cold orientation means being preferably disposed continuously in this order.

The shape-memory polybutylene terephthalate laminate film of the present invention comprises (1) the polybutylene terephthalate film obtained by the production method of the present invention, and (2) another film or film laminate, which is at least one selected from the group consisting of a paper sheet, another resin film and a metal foil, whereby it is provided with the memory of a first shape given in a predetermined temperature range.

Even though the shape-memory polybutylene terephthalate laminate film of the present invention is deformed to a second shape in a temperature range different from the predetermined temperature range, it substantially recovers a first shape when exposed to a temperature equal to or higher than the temperature at which the memory of the first shape is given.

In a preferred example of the shape-memory polybutylene terephthalate laminate film of the present invention, the temperature for recovering the first shape is the glass transition temperature of the polybutylene terephthalate or lower. The temperature for recovering the first shape is preferably 15 to 25°C.

In another preferred example of the shape-memory polybutylene terephthalate laminate film of the present invention, the temperature for recovering the first shape is higher than the glass transition temperature of the polybutylene terephthalate and lower than the melting point. The temperature for recovering the first shape is preferably 75 to 100°C.

The first shape is preferably a curled shape, and the second shape is preferably a substantially flat shape or an oppositely curled shape.

The polybutylene terephthalate film is preferably provided with a lot of substantially parallel linear scratches on at least one entire surface, so that the shape-memory polybutylene terephthalate laminate film can be torn substantially straight along the linear scratches. The depth of the linear scratches is preferably 1 to 40% of the thickness of the polybutylene terephthalate film. Specifically, the linear scratches have depth of 0.1 to 10 µm and width of 0.1 to 10 µm, and intervals between the linear scratches are preferably 10 to 200 µm. At least one surface of the polybutylene terephthalate film is vapor-deposited with a ceramic or a metal.

In a preferred embodiment of the present invention, the shape-memory polybutylene terephthalate laminate film has a layer structure comprising the polybutylene terephthalate film, the paper sheet and a sealant film in this order. In another preferred embodiment of the present invention, the shape-memory polybutylene terephthalate laminate film has a layer structure comprising the polybutylene terephthalate film, the paper sheet, a rigid film and a sealant film in this order. In a further preferred embodiment of the present invention, the shape-memory polybutylene terephthalate laminate film has a layer structure comprising the polybutylene terephthalate film, a rigid film and a sealant film in this order. The polybutylene terephthalate film may be provided with a light-screening ink layer on a surface on the side of the paper sheet, or on a surface of the rigid film on the side of the sealant film.

The shape-memory polybutylene terephthalate laminate film of the present invention is useful as wrapping sheets particularly for container lids.

### BRIEF DESCRIPTION OF THE DRAWINGS

Fig. 1 is a schematic view showing an example of an apparatus for producing a polybutylene terephthalate film by an air-cooled inflation method according to the present invention;
Fig. 2 is a schematic view showing an example of an apparatus for slowly cooling a bubble;
Fig. 3(a) is a plan view showing one example of a rectifying plate;
Fig. 3(b) is a plan view showing another example of the rectifying plate;
Fig. 3(c) is a plan view showing a further example of the rectifying plate;
Fig. 4(a) is a partially cross-sectional, schematic side view showing an example of an apparatus for the sequential biaxial cold orientation of a PBT film produced by an air-cooled inflation method;
Fig. 4(b) is a schematic plan view showing the apparatus of Fig. 4(a);
Fig. 5(a) is a schematic side view showing an example of an apparatus for cold-orienting a PBT film produced by an air-cooled inflation method in a longitudinal direction;
Fig. 5(b) is a schematic side view showing another example of an apparatus for cold-orienting a PBT film produced by an air-cooled inflation method in a longitudinal direction;
Fig. 5(c) is a schematic side view showing a further example of an apparatus for cold-orienting a PBT film produced by an air-cooled inflation method in a longitudinal direction;
Fig. 6 is an schematic view showing an example of an apparatus for cold-orienting a PBT film produced by an air-cooled inflation method by an inline system;
Fig. 7 is a cross-sectional view showing one example of the layer structure of a shape-memory PBT laminate film;
Fig. 8 is a cross-sectional view showing another example of the layer structure of a shape-memory PBT laminate film;
Fig. 9 is a cross-sectional view showing a further example of the layer structure of a shape-memory PBT laminate film;
Fig. 10 is a cross-sectional view showing a still further example of the layer structure of a shape-memory PBT laminate film;
Fig. 11 is a cross-sectional view showing a still further example of the layer structure of a shape-memory PBT laminate film;
Fig. 12 is a cross-sectional view showing a still further example of the layer structure of a shape-memory PBT laminate film;
Fig. 13 is a schematic view showing one example of an apparatus for producing a shape-memory PBT laminate film;
Fig. 14 is a schematic view showing another example of an apparatus for producing a shape-memory PBT laminate film;
Fig. 15 is a schematic view showing a further example of an apparatus for producing a shape-memory PBT laminate film;
Fig. 16 is a schematic view showing a still further example of an apparatus for producing a shape-memory PBT laminate film;
Fig. 17 is a schematic view showing a still further example of an apparatus for producing a shape-memory PBT laminate film;
Fig. 18 is a schematic view showing one example of an apparatus for producing a container with a lid;

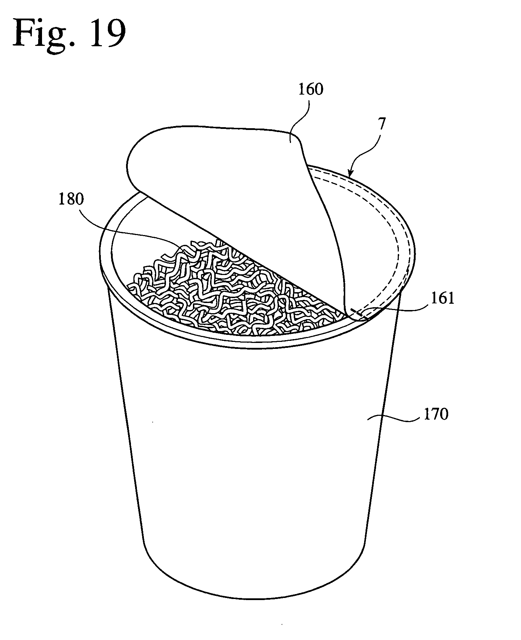

Fig. 19 is a perspective view showing a container for instant food, from which a lid composed of the shape-memory PBT laminate film of the present invention is opened to pour hot water thereinto;
Fig. 20 is a perspective view showing a container for instant food, from which a lid composed of the shape-memory PBT laminate film of the present invention is opened by partially tearing to pour hot water thereinto;
Fig. 21 is a perspective view showing a container with a lid of the present invention, which is used as a container for semisolid food;
Fig. 22 is a perspective view showing a container with a lid of Fig. 21 in an open state;
Fig. 23 is a schematic view showing the shape recovery of a shape-memory PBT laminate film used as a food tray;
Fig. 24 is a schematic view showing one example of an apparatus for forming linear scratches in a progressing direction of a film;
Fig. 25 is a partial enlarged view showing the blowing of a compressed air onto a surface of a film sliding on a pattern roll in the apparatus shown in Fig. 24;
Fig. 26 is a partial, enlarged, cross-sectional view showing a film in sliding contact with a pattern roll in the apparatus shown in Fig. 24;
Fig. 27(a) is a front view showing one example of a nozzle together with its right side;
Fig. 27(b) is a front view showing another example of a nozzle together with its right side;
Fig. 27(c) is a schematic view showing the blowing of a compressed air onto a pattern roll by a nozzle with a hood;
Fig. 28 is a schematic side view showing another example of an apparatus for forming linear scratches in a progressing direction of a film;
Fig. 29 is a perspective view showing one example of an apparatus for forming linear scratches slanting to a progressing direction of a film;
Fig. 30(a) is a partial enlarged plan view showing a film in sliding contact with an endless pattern belt in the apparatus shown in Fig. 29;
Fig. 30(b) is a schematic cross-sectional view taken from the direction D in Fig. 30(a);
Fig. 31 is a schematic view showing another example of an apparatus for forming linear scratches slanting to a progressing direction of a film;
Fig. 32 is a partial enlarged plan view showing a film in sliding contact with a roll train in the apparatus shown in Fig. 31;
Fig. 33(a) is a partial enlarged plan view showing another example of an apparatus for forming linear scratches slanting to a progressing direction of a film;
Fig. 33(b) is a schematic view taken from the direction E in Fig. 33(a);
Fig. 34 is a partial enlarged plan view showing one example of an apparatus for forming linear scratches in a width direction to a progressing direction of a film;
Fig. 35 is a partial enlarged plan view showing another example of an apparatus for forming linear scratches in a width direction to a progressing direction of a film;
Fig. 36 is a partial enlarged plan view showing a further example of an apparatus for forming linear scratches in a width direction to a progressing direction of a film;
Fig. 37(a) is a partial enlarged plan view showing a still further example of an apparatus for forming linear scratches in a width direction to a progressing direction of a film; and
Fig. 37(b) is a schematic view taken from the direction F in Fig. 37(a).

### DETAILED DESCRIPTION OF THE PREFERRED EMBODIMENTS

### [1] Production method of polybutylene terephthalate film

### (I) Polybutylene terephthalate resin as starting material

Though not particularly restricted, the polybutylene terephthalate (PBT) resin as a starting material is preferably a homopolymer comprising 1,4-butanediol and terephthalic acid as constituents. Within ranges not deteriorating properties such as shape memory, a thermal shrinkage resistance, etc., other diols than 1,4-butanediol and other carboxylic acids than terephthalic acid may be included as comonomers. Such diols may be, for instance, ethylene glycol, diethylene glycol, neopentyl glycol, 1,4-cyclohexanemethanol, etc. The dicarboxylic acids may be, for instance, isophthalic acid, sebacic acid, adipic acid, azelaic acid, succinic acid, etc. A specific example of PBT resins forming the PBT film may be, for instance, a homo-PBT resin commercially available from Toray Industries, Inc. under the tradename of "Toraycon."

The PBT resin is not restricted to PBT only, but may contain other thermoplastic resins within ranges not hindering the effects of the present invention depending on its applications. The other thermoplastic resins may be polyesters such as polyethylene terephthalate (PET) and polyethylene naphthalate (PEN); polyphenylene sulfide (PPS); polyamides (PA); polyimides (PI); polyamideimides (PAI); polyethersulfone (PES); poltetheretherketone (PEEK); polycarbonates; polyurethanes; fluororesins; polyolefins such as polyethylene and polypropylene; polyvinyl chlorides; elastomers, etc. When the other thermoplastic resins are contained, their proportions are preferably 5 to 15% by mass, more preferably 5 to 10% by mass, based on the entire PBT resin (100% by mass). Accordingly, unless otherwise particularly mentioned, it should be noted that the term "polybutylene terephthalate resin" used herein includes both PBT only, and a composition comprising PBT and other thermoplastic resins.

The PBT film preferably has a relatively high molecular weight. When a tube of a molten PBT resin extruded from an annular die is inflated by the injection of air to form a bubble, the inflating portion of the bubble is more easily kept in an amorphous state if the PBT resin has a higher molecular weight. Specifically, the intrinsic viscosity (IV) of the PBT film is preferably 0.8 to 1.5.

The PBT film may properly contain known additives added to usual thermoplastic resins and thermosetting resins, such as plasticizers, stabilizers such as antioxidants, UV absorbents, etc., antistatics, surfactants, coloring agents such as dyes and pigments, lubricants for improving flowability, nucleating agents, inorganic fillers, etc., depending on properties required.

### (II) Air-cooled inflation

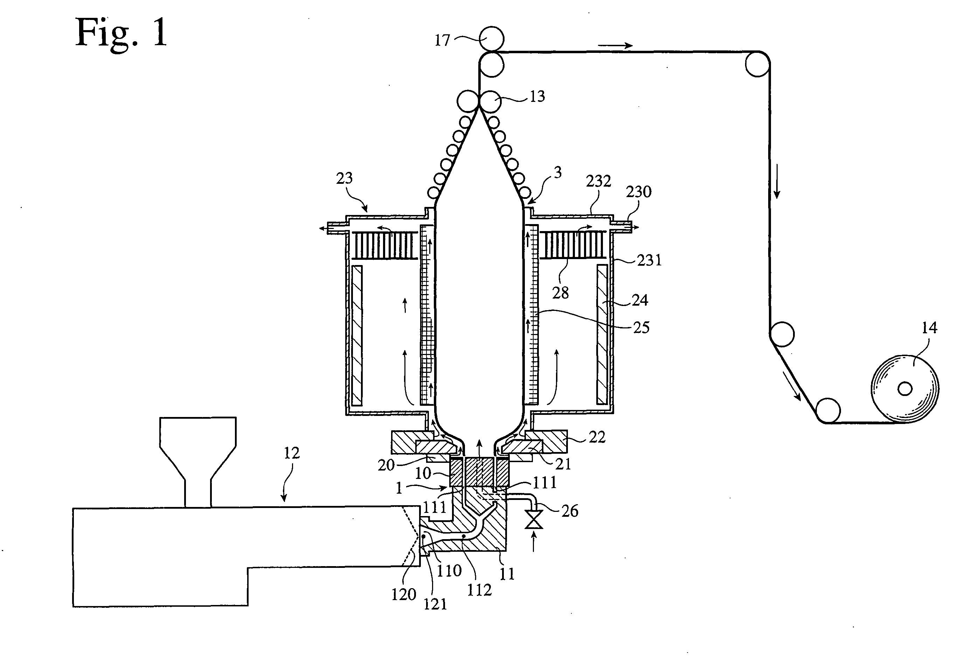

Fig. 1 shows steps in the production of a PBT film of the present invention by an air-cooled inflation method. A tubular film extruded from an annular die 1 mounted to an extruder 12 is rapidly inflated to a predetermined width by injecting air thereinto through an air-injecting pipe 26, nipped by nip rolls 13, and taken off by a winding reel 14. The annular die 1 has an annular die head 10 and a weld part 11. The air-injecting means for supplying air into the tubular film is not particularly restricted but may have a structure having an air-injecting pipe 26 connected to a blower, a structure having an air-injecting pipe 26 connected to a compressed air reservoir, etc.

To produce the PBT film, the PBT resin is first blended with the desired additives. The blending temperature and pressure are controlled such that the resin-extruding temperature and pressure described below are within the range of the present invention. When the blending is conducted in an extruder such as a single-screw extruder, those having screw structures generating no heat, or those having proper cooling means are used to prevent the blending temperature from becoming higher than necessary.

The PBT resin-extruding temperature is from the melting point of the PBT resin (hereinafter referred to simply as "melting point," unless otherwise mentioned) - 15°C to the melting point - 5°C, preferably from the melting point - 10°C to the melting point - 5°C. Incidentally, the resin-extruding temperature is measured by a temperature detector 112 (thermocouple, etc.) disposed in a resin flow path in the weld part 11 connecting an outlet 110 of the extruder 12 and an inlet 111 of a die head 10. Because of an extremely high resin-extruding speed, it is presumed that the resin-extruding temperature is substantially within a temperature range from the melting point - 15°C to the melting point - 5°C both in the outlet 110 of the extruder 12 and in the outlet of the die head 10. However, the weld part 11 is not restricted to the depicted structure. For instance, when the PBT resin is a homopolymer having a melting point of 220°C, the resin-extruding temperature is 205 to 215°C, preferably 210 to 215°C. With the resin-extruding temperature ranging from the melting point - 15°C to the melting point - 5°C, it is possible to obtain a PBT film having high crystallinity and excellent thickness uniformity and thermal shrinkage resistance.

The resin-extruding pressure is 8.3 to 13.7 MPa (85 to 140 kgf/cm²). Because the resin pressure in the die head 10 cannot be measured due to the apparatus structure, the pressure measured by the pressure detector 121 disposed at the extruder outlet 110 is used as the resin-extruding pressure. With the resin-extruding pressure of 8.3 to 13.7 MPa, even though the resin-extruding temperature is the melting point - 15°C to the melting point - 5°C, it is possible to extrude a resin having a sufficient melt viscosity for the formation of a bubble. The resin-extruding pressure is preferably 9.3 to 11.8 MPa (95 to 120 kgf/cm²). The resin-extruding pressure can be controlled by changing the mesh of a screen pack 120 in the extruder, or an annular orifice gap.

The die lip of the die head 10 preferably has an outer diameter of 120 to 250 mm and a gap of 0.8 to 1.2 mm.

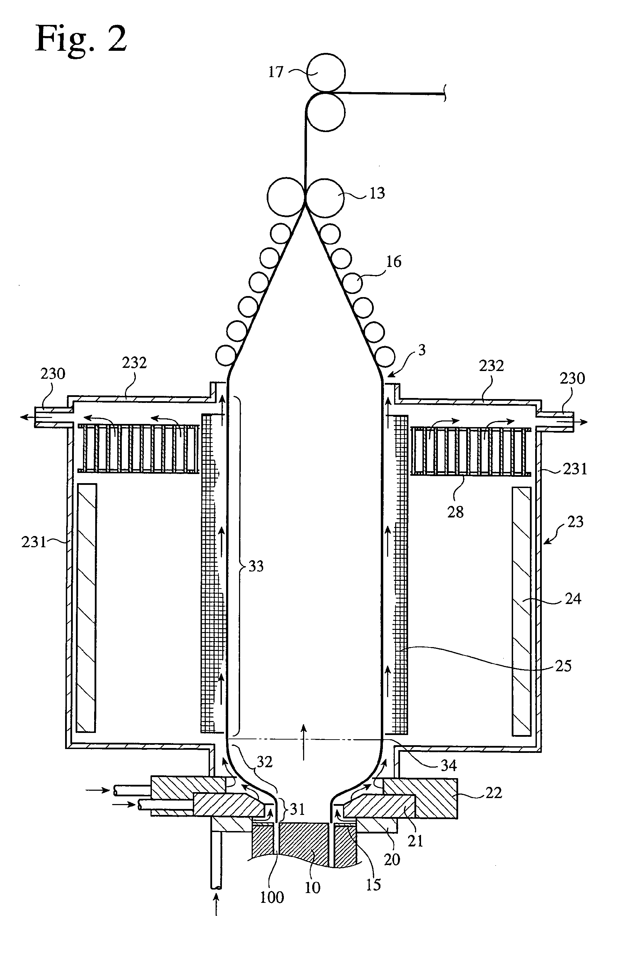

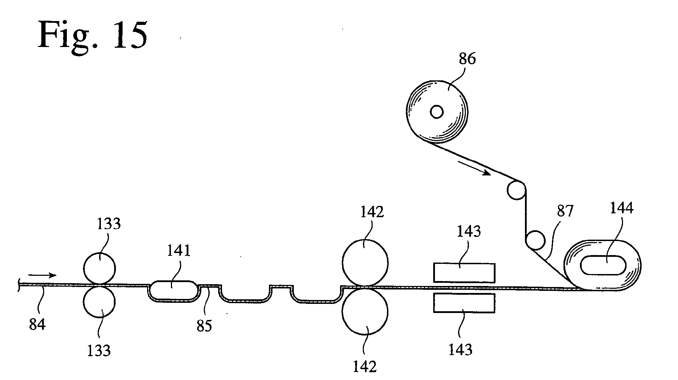

The bubble 3 extruded from the annular die 1 is oriented both in a longitudinal direction (MD) and a transverse direction (TD) while being slowly cooled by a cooling means. In Fig. 2, the bubble-cooling means comprises a first hot-air-blowing means 20 disposed near the annular die 1, a second hot-air-blowing means 21 disposed above the first hot-air-blowing means 20, a third hot-air-blowing means 22 disposed above the second hot-air-blowing means 21, a partition 23 disposed above the third hot-air-blowing means 22, a heating means 24 disposed inside the partition 23, and a cylindrical net 25 disposed inside the partition 23 (near the bubble 3). In Fig. 2, 15 denotes a heat insulator disposed above the annular die 1, and 16 denotes a guide roll.

In the apparatus having the above structure, the arrangement of each hot-air-blowing means 20-22 and partition 23 is determined by the temperature control of the bubble 3 formed by the an air-cooled inflation method. Accordingly, the shape and temperature distribution of the bubble 3 will be explained below.

A molten PBT resin or resin composition is extruded from the annular orifice 100 of the die 1 to form the bubble 3, and the bubble 3 immediately after extrusion has a small diameter because of a low melt tension, forming a so-called neck portion 31. In the neck portion 31, the bubble 3 is oriented mainly in MD. The bubble 3 is then rapidly inflated to a predetermined diameter. In this inflating portion 32, the bubble 3 is oriented in MD and TD simultaneously. There is a frost line 34 near and above the inflating portion 32, at which the PBT resin becomes a solidified state. The bubble 3 is further slowly cooled by the partition 23 and the heating means 24 disposed in the bubble region 33 above the frost line 34.

To obtain the PBT film by an air-cooled inflation method according to the present invention, the temperature of each portion of the bubble 3 is controlled as follows:
(a) The resin-extruding temperature is controlled to the melting point - 15°C to the melting point - 5°C.
(b) The neck portion 31 is slowly cooled to the melting point - 40°C to the melting point - 25°C.
(c) The inflating portion 32 is slowly cooled to the melting point - 70°C to the melting point - 40°C.
(d) The region at the frost line 34 is slowly cooled to the melting point - 130°C to the melting point - 90°C.
(e) The bubble region 33 is kept at a temperature higher than the Tg of the PBT resin and Tg + 65°C or lower.

The above condition (a) is as described above. With respect to the condition (b), unless the neck portion 31 is slowly cooled to the melting point - 40°C to the melting point - 25°C, the simultaneous biaxial orientation of the inflating portion 32 in MD and TD cannot be sufficiently achieved. Namely, the slow cool of the neck portion 31 to the melting point - 40°C to the melting point - 25°C makes it possible to slowly cool the inflating portion 32 to the melting point - 70°C to the melting point - 40°C and keep it at this temperature [condition (c)]. In a case where the PBT resin is a homopolymer, the neck portion 31 is preferably slowly cooled to 180 to 195°C. Unless the inflating portion 32 is kept at the melting point - 70°C to the melting point - 40°C, the inflating portion 32 does not have a proper melt tension, resulting in orientation mostly in MD and thus failing to make the bubble fully thin. When the inflating portion 32 becomes lower than the melting point - 70°C, crystallization proceeds, failing to keep an amorphous state. In a case where the PBT resin is a homopolymer, the inflating portion 32 is slowly cooled to 150 to 180°C.

To meet such temperature conditions, the blow-up ratio (bubble diameter / die diameter) is preferably 2.0 to 4.0. Particularly, the blow-up ratio is preferably 2.0 to 2.8.

With respect to the condition (d), the bubble in the region at the frost line 34 is slowly cooled to the melting point - 130°C to the melting point - 90°C to achieve the sufficient simultaneous biaxial orientation of the bubble 3 in MD and TD. When the bubble temperature is lower than the melting point - 130°C in the region at the frost line 34, film wrinkles are likely to be generated. In a case where the PBT resin is a homopolymer, the region at the frost line 34 is preferably slowly cooled to 90 to 130°C.

With respect to the condition (e), the generation of film wrinkles can be prevented, and the formation of a uniform thin bubble 3 can be stabilized, by keeping the bubble 3 above the frost line 34 at a temperature higher than the Tg of the PBT resin and Tg + 65°C or lower. The bubble region 33 is preferably kept at 90 to 110°C. When the temperature of the bubble region 33 is kept at Tg or lower without the partition 23 and the heating means 24, uneven orientation is likely to occur, resulting in an unstable bubble 3 as a whole. The Tg of the PBT resin is generally 22 to 45°C. Tg is measured according to JIS K7121.

In the present invention, as shown in Fig. 2, the bubble region 33 is preferably further surrounded by a cylindrical net 25, so that the temperature of the bubble region 33 can be further stabilized, and thus the lateral vibration of the bubble 3 can be prevented.

To conduct the temperature control of the bubble 3 as described above, the arrangement of the first hot-air-blowing means 20, the second hot-air-blowing means 21, the third hot-air-blowing means 22, the partition 23, the heating means 24, and the cylindrical net 25 is as follows:

### (i) First hot-air-blowing means 20

It is disposed close to the annular die 1 to eject warm air, such that the neck portion 31 is slowly cooled to the melting point - 40°C to the melting point - 25°C. The temperature of such warm air is preferably 25 to 50°C.

### (ii) Second hot-air-blowing means 21

It is disposed immediately under the inflating portion 32 to eject warm air, such that the inflating portion 32 is slowly cooled to the melting point - 70°C to the melting point - 40°C. The temperature of such warm air is preferably 25 to 50°C.

### (iii) Third hot-air-blowing means 22

It is disposed immediately under the frost line 34 to eject warm air, such that the region at the frost line 34 is slowly cooled to the melting point - 130°C to the melting point - 90°C. The temperature of such warm air is preferably higher than the Tg of the PBT resin and Tg + 65°C or lower.

### (iv) Partition 23 and heating means 24

The partition 23 is disposed at such a position that it surrounds the bubble region 33 above the third hot-air-blowing means 22, and that the warm air ejected from the first to third hot-air-blowing means is caused to flow upward along the outer surface of the bubble region 33. The heating means 24 is disposed inside the partition 23. With the partition 23 and the heating means 24, the bubble region 33 is isolated from the influence of an ambient atmosphere (temperature, etc.), so that it can always be kept at a temperature higher than the Tg of the PBT resin and Tg + 65°C or lower.

### (v) Cylindrical net 25

It is disposed inside the partition 23, such that it surrounds the bubble region 33.

In the above method, a means for supplying the warm air to the first to third hot-air-blowing means, through which it is ejected, is not particularly restricted, but may be a temperature-controllable blower, etc. The flow rate of the warm air ejected from the first to third hot-air-blowing means is properly controlled, such that the bubble temperature in each of the neck portion 31, the inflating portion 32 and the region at the frost line 34 is within the above temperature range. Because the bubble 3 is unstable without stable slow cooling effects, the temperature of the warm air is controlled as constant as possible.

Though not particularly restrictive, the materials of the partition 23 are preferably acrylic resins such that the bubble region 33 surrounded by the partition 23 can be inspected. As long as it surrounds the bubble region 33, the shape of the partition 23 is not particularly restricted. For instance, it may have a cylindrical or rectangular structure, and preferably a cylindrical structure. The heating means 24 disposed inside the partition 23 may be, for instance, an electric heater in a rod or ribbon shape. Pluralities of rod-shaped electric heaters are preferably disposed. An aluminum foil may be attached to the inner surface of the partition 23 to shut heat radiation. If necessary, a means for blowing up a cold air at about room temperature may be disposed under the partition 23 (immediately above the third hot-air-blowing means 22). This makes it easy to control the temperature and the flow rate of the air inside the partition 23.

As shown in Fig. 2, warm air exits 230 are preferably disposed above the partition 23. The warm air exits 230 can rectify the cooling air ejected from the first to third hot-air-blowing means, thereby preventing the cooling air from laterally vibrating the bubble 3. The number of the warm air exits 230 is preferably 2 or more, more preferably 2 to 4. Though the warm air exits 230 are disposed in an upper portion of the side surface 231 of the partition 23 in the embodiment shown in Fig. 2, they may be disposed on the upper surface 232 of the partition 23. The number and opening diameter of the warm air exits 230 are determined to such an extent that the temperature-keeping function of the partition 23 is not deteriorated.

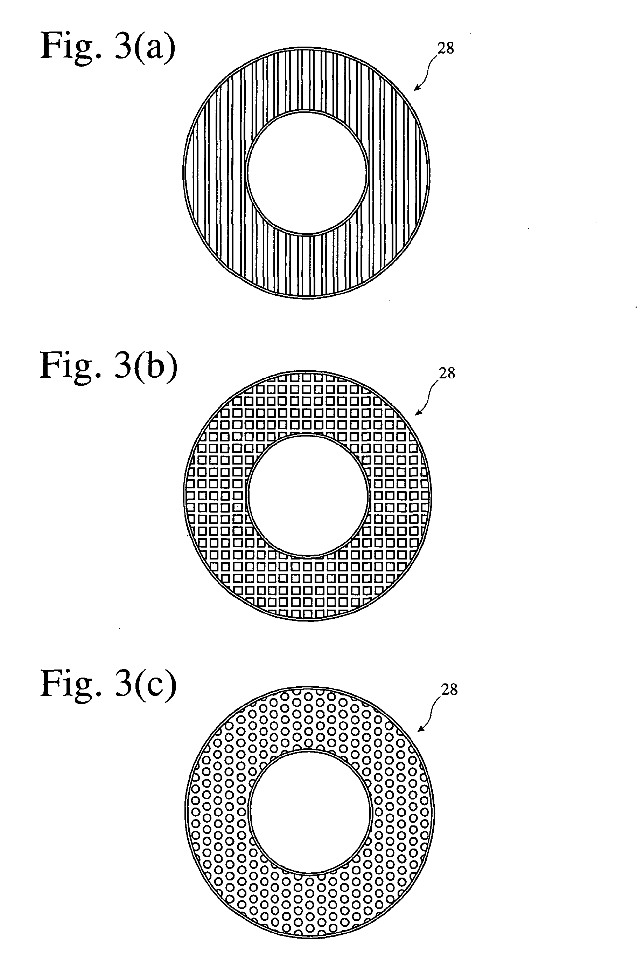

As shown in Fig. 2, a ring-shaped rectifying plate 28 is preferably disposed inside the partition 23 in an upper portion. The rectifying plate 28 can further rectify the cooling air ejected from the first to third hot-air-blowing means, thereby further improving the lateral vibration of the bubble 3. As shown in Fig. 2, the rectifying plate 28 preferably extends substantially from the cylindrical net 25 to the inner surface of the partition 23. Though not particularly restrictive, the rectifying plate 28 may have a structure comprising partition plates arranged in one direction as shown in Figs. 2 and 3(a), a structure having a lattice partition as shown in Fig. 3(b), a structure having a plate punched to have a lot of round holes as shown in Fig. 3(c), a net structure, etc. The opening ratio of the rectifying plate 28 is preferably 40 to 60%. Though not particularly restrictive, the material of the rectifying plate 28 may be aluminum, synthetic resins, etc. The number of the rectifying plates 28 is not particularly restricted, but it may be usually one.

Fibers constituting the cylindrical net 25 may be natural fibers such as silk, cotton, etc., fibers of plastics such as nylon, polypropylene, polyesters, etc., fibers of metals such as stainless steel, copper, brass, nickel, etc. The cylindrical net 25 preferably has 5 to 20 meshes, particularly 8 to 10 meshes.

The production of a PBT resin film by an air-cooled inflation method can meet the above requirements, and other conditions may be those generally used in the inflation method. Namely, a molten tubular PBT resin is continuously extruded from a crosshead die upward or downward with its thickness prevented from being uneven by rotating the die in one or other direction, inflated with the air introduced thereinto to a predetermined size with its end pinched by rolls, and taken off by winding.

Because each portion of the bubble, such as a portion immediately after extrusion, a neck portion, an inflated portion, a frost line region, bubble region, etc. is always kept at the desired temperature by the production method of the present invention, the resultant film always has a uniform quality. In addition, the film can be formed at a high speed.

### (III) Orientation step

The PBT film obtained by the air-cooled inflation described above, which may be called "PBT inflation film," may further be subjected to monoaxial cold orientation in a longitudinal or transverse direction, or sequential biaxial cold orientation in longitudinal and transverse direction, at a temperature higher than the Tg of the PBT resin and Tg + 60°C or lower. This makes the PBT inflation film thinner, while improving its thickness uniformity and transparency. The preferred cold orientation temperature is 55 to 65°C. In the monoaxial cold orientation, the orientation ratio is preferably 2 times or more, more preferably 2 to 6 times in a longitudinal or transverse direction. The monoaxial cold orientation is conducted preferably in a longitudinal direction. In the sequential biaxial cold orientation, the orientation ratio is preferably 4 times or more, more preferably 4 to 16 times by area magnification.

When the PBT film is stretched at a temperature higher than Tg + 60°C, crystals are generally oriented along the stretching direction, resulting in drastic improvement in tensile strength, elastic modulus, rigidity, etc. in the orientation direction. However, because its strength decreases in the unoriented direction, the sequential biaxial orientation at a temperature higher than Tg + 60°C is likely to tear the film. On the other hand, less orientation occurs in molecular chains along the stretching direction when the PBT film is cold-oriented at a temperature higher than the Tg of the PBT resin and Tg + 60°C or lower, than when stretched at a temperature higher than Tg + 60°C. Accordingly, even if the PBT inflation film is subjected to sequential biaxial orientation at a temperature higher than Tg and Tg + 60°C or lower, the film is not torn. In addition, the cold orientation at a temperature higher than Tg and Tg + 60°C or lower does not make the PBT film easy-to-tear even if the monoaxial orientation is conducted. Also, the cold orientation at a temperature higher than Tg and Tg + 60°C or lower destroys crystals to generate fine spherulites, thereby improving the film transparency.

When the monoaxial cold orientation is conducted by a roll method, or when the sequential biaxial cold orientation is conducted by a roll method and a tenter method, the tubular PBT film obtained by the air-cooled inflation is bisected and then subjected to cold orientation. To bisect the tubular PBT inflation film, the film is cut at both side edges in parallel to the sheet surface in a flattened state by cutters, or the lateral edge portions of the film are cut away by slitters.

The steps of (a) air-cooled inflation, (b) bisecting the tubular PBT inflation film and (c) cold orientation may be sequential steps, in which after the PBT film obtained by the air-cooled inflation is once bisected and wound to form a wound film, each bisected PBT inflation film is subjected to cold orientation while being unwound. However, the above steps (a) to (c) are preferably inline steps conducted continuously on a serial line.

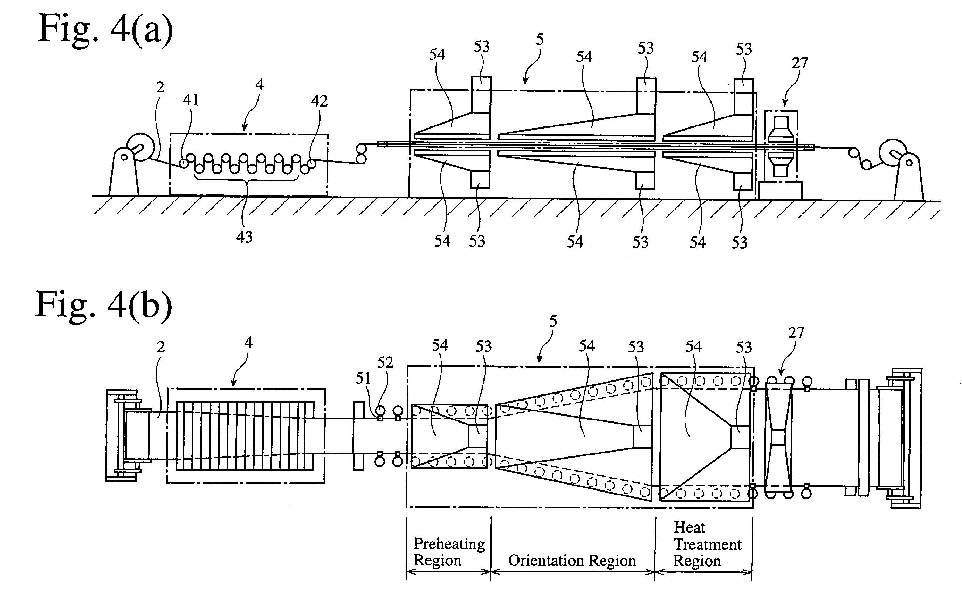

Figs. 4(a) and 4(b) show an example of an apparatus for bisecting the PBT film obtained by the air-cooled inflation, winding it, and then subjecting it to sequential biaxial cold orientation both in a longitudinal direction and in a transverse direction.

The unwound PBT inflation film 2 is stretched in a longitudinal direction in a longitudinal orientation region 4 by heating rolls 43 between a slowly driven roll 41 and a rapidly driven roll 42. The longitudinally stretched PBT film 2 is oriented in a transverse direction with both edges gripped while being heat-treated in a tenter (transverse orientation region) 5. The transversely oriented PBT film 2 is rapidly cooled by blowing a cooling air in a cooling column 27.

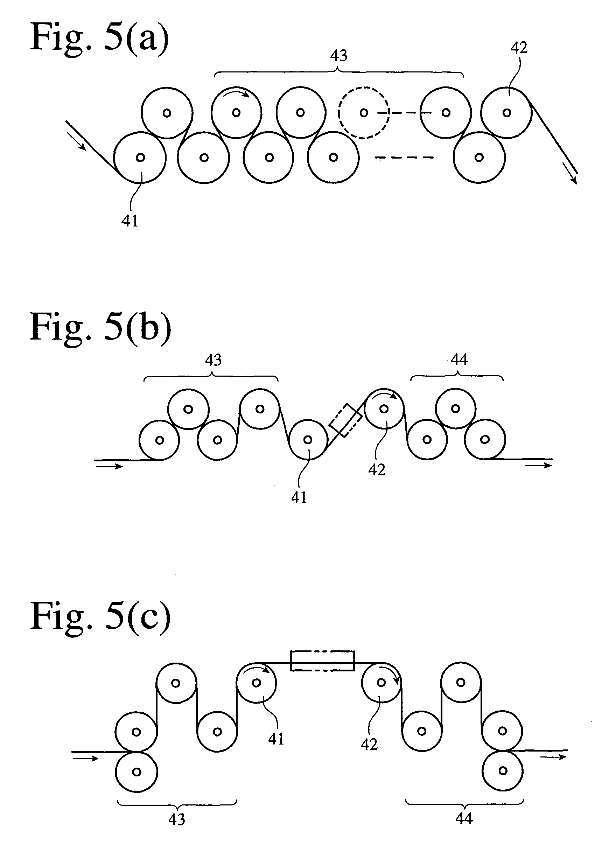

As shown in Fig. 5(a) in detail, the longitudinal orientation is conducted by causing the PBT inflation film 2 to pass through a lot of rotatable heating rolls 43 disposed between the slowly driven roll 41 on the most upstream side and the rapidly driven roll 42 on the most downstream side, at a proper peripheral speed ratio of the slowly driven roll 41 to the rapidly driven roll 42. The temperature of the heating rolls 43 is set such that the PBT inflation film is at a temperature higher than Tg and Tg + 60°C or lower.

Figs. 5(b) and 5(c) show another example of the longitudinal orientation region 4. Fig. 5(b) shows an example of a nip roll system, and Fig. 5(c) shows an example of a clover roll system. In any system, the PBT inflation film 2 is preheated by pluralities of preheating roll 43, oriented while being heated between the slowly-driven heated roll 41 and the rapidly-driven heated roll 42, and then cooled by pluralities of cooling rolls 44.

In the tenter 5, a chain (not shown) provided with film-clipping rollers 51 is circulating endlessly along each rail (not shown). The tenter 5 comprises three parts; a preheating region, an orientation region and a heat treatment region. The longitudinally oriented PBT film 2 is heated by blowing warm air introduced through a warm-air-introducing hole 53, in each of the preheating region, the orientation region and the heat treatment region. In Fig. 4, 52 denotes a gear, and 54 denotes a hood for blowing warm air onto the PBT film 2 uniformly. In the preheating region, the orientation region and the heat treatment region, the temperature of the warm air ejected is set such that the PBT film 2 passing through each part is kept at a temperature higher than Tg and Tg + 60°C or lower. The rapid cooling in the cooling column 27 is determined such that the temperature of the oriented PBT film 2 becomes the glass transition temperature or lower.

When the PBT inflation film 2 is subjected only to monoaxial cold orientation in a longitudinal or transverse direction, the PBT inflation film 2 needs only be oriented in the longitudinal orientation region 4 or the transverse orientation region 5 as described above, and then rapidly cooled. The monoaxial cold orientation in a longitudinal or transverse direction, and the sequential biaxial cold orientation both in a longitudinal direction and in a transverse direction are not restricted to the roll system and the tenter system as shown in Fig. 4, but a tubular method, etc. may also be used. When the tubular method is used, the steps comprising (a) the air-cooled inflation and (b) the cold orientation are preferably inline steps continuously conducted on a serial line.

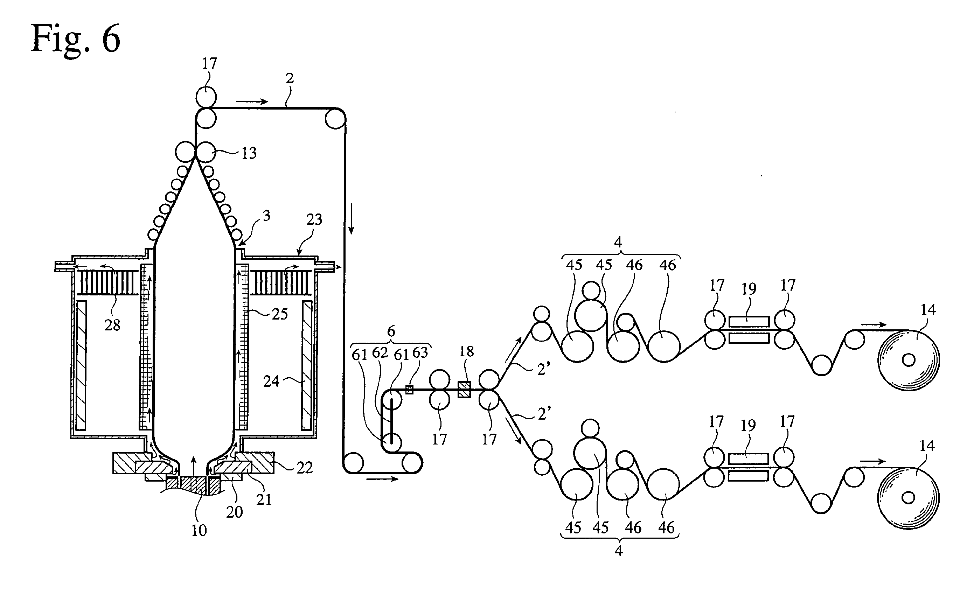

Fig. 6 shows an example of an inline apparatus for continuously conducting the air-cooled inflation, the cutting of the tubular PBT inflation film and the cold orientation on a serial line. The tubular film 2 taken up by the nip rolls 13 in a flattened state are cut to two sheets at both edges by a cutter 18 in parallel to the sheet surface, and each separated PBT inflation film 2', 2' is subjected to cold orientation in each longitudinal orientation region 4, 4. As shown in Fig. 6, an edge position control unit (EPC) 6 is preferably disposed upward of the cutter 18. This makes it possible to keep the edge positions of the PBT inflation film always at constant positions during cutting by the cutter 18, so that the tubular PBT inflation film 2 can be divided always evenly. The edge position control unit 6 shown in Fig. 6 comprises two guide rolls 61, 61, a shaft 62 connecting the guide rolls 61, 61, and a sensor 63, the tilting angles of the guide rolls 61, 61 being changed by an instruction signal from the sensor 63, so that the edge positions of the PBT inflation film 2 can always be kept from changing. Not restricted to that depicted, the edge position control unit may use any other known control mechanisms.

In the longitudinal orientation region 4, 4, each PBT inflation film 2', 2' is cold-oriented between the slowly driven heated rolls 45, 45 and the rapidly driven cooled rolls 46, 46. The temperature of the slowly driven rolls 45, 45 is set such that the temperature of the PBT inflation film is higher than Tg and Tg + 60°C or lower. The temperature of the rapidly driven roll 46, 46 is set at the Tg of the PBT inflation film or lower, preferably lower than Tg. The orientation ratio may be controlled by properly adjusting the peripheral speed ratio of the slowly driven rolls 45, 45 to the rapidly driven rolls 46, 46. The tenter (transverse orientation region) 5 shown in Fig. 4 may be disposed downstream of the longitudinal orientation regions 4, 4, so that cold orientation in a transverse direction can be further conducted.

A heater 19 is preferably disposed as shown in Fig. 6 to heat-treat the cold-oriented film while keeping it horizontal by the nip rolls 17, 17. In place of the heater 19, heat treatment may be carried out by a heated roll. The heat treatment is preferably conducted at a temperature higher than the Tg of PBT and the melting point - 50°C or lower. The heat treatment after cold orientation further improves the transparency, tensile strength, thermal shrinkage resistance and thickness uniformity of the PBT film while suppressing wrinkles. The heat treatment at Tg + 60°C or higher to the melting point - 50°C or lower can provide the film with easy-to-straight-tear characteristics. When the film is not provided with easy-to-straight-tear characteristics, the heat treatment may be conducted at a temperature higher than Tg and lower than Tg + 60°C. Such change of the heat treatment temperature results in providing the film with different easy-to-straight-tear characteristics and thus different tearing resistance.

Using the inline apparatus shown in Fig. 6, a series of steps comprising (a) the air-cooled inflation, (b) the cutting of the tubular PBT inflation film and (c) the cold orientation are made more efficient.

### [2] Polybutylene terephthalate film

The PBT film produced by the air-cooled inflation method described in [1] above has higher crystallinity, better thickness uniformity and lower thermal shrinkage ratio than those of the conventional inflation films. Specifically, a film having an average thickness of 8 to 30 µm has thickness unevenness of ± 1 to 3 µm, with a thermal shrinkage ratio of 0.4% or less in MD (longitudinal direction) and TD (transverse direction). The thickness difference is a difference between the maximum thickness and the minimum thickness among those measured on the PBT film at six points in total in a width direction in a center portion and both end portions (two points each). The smaller difference means good results. The thermal shrinkage ratio was measured on the PBT film exposed to 175°C for 10 minutes in both MD and TD. Because of such uniformity, it is possible to form a print layer and a vapor-deposited metal layer with little unevenness, with little variation in a film size in the secondary working such as heat sealing, printing, etc.

The reason why the PBT film produced by the air-cooled inflation method described in [1] above has a low thermal shrinkage ratio as described above seems to be due to the fact that the bubble is substantially uniformly oriented both in a machine direction (MD) and a transverse direction (TD) because regions of the bubble from the neck portion to the frost line are slowly cooled, and that there is no strain (stress) in the resultant bubble because the bubble regions are kept higher than Tg and Tg + 65°C or lower.

Particularly a film having an average thickness of 3 to 30 µm, which is subjected to the cold orientation described in [1] above after the air-cooled inflation, has thickness unevenness of 1 to 2 µm, resulting in a thermal shrinkage ratio of 1% or less in a cold orientation direction. In addition, the resultant film has excellent mechanical strength because of no ease to tear in any direction.

The PBT film produced by the air-cooled inflation method described in [1] above has higher crystallinity than the conventional inflation films. Specifically, the crystallinity of the PBT inflation film of the present invention measured by an X-ray method is 35 to 40%, indicating that it has excellent mechanical strength. On the other hand, the PBT film inflated after extruded at the melting point or higher usually has crystallinity of 30% or less. Incidentally, the cast PBT usually has crystallinity of about 8 to 10%.

The cold-oriented PBT film has a lot of fine linear wrinkles extending in a cold orientation direction. Namely, the cold-oriented PBT film usually has surface roughness ranging from 50 to 500 nm with roughness width (intervals between tips of linear wrinkles) of 500 to 20,000 nm, when measured by an atomic force microscope (AFM). However, when the sequential biaxial cold orientation is conducted both in a longitudinal direction and in a transverse direction, linear wrinkles generated by the preceding cold orientation disappear, and only linear wrinkles generated by the later cold orientation remain on the PBT film surface. Thus, even with the sequential biaxial cold orientation, only one-directional linear wrinkles exist on the PBT film.

The cold-oriented PBT film has a light diffraction/scattering function because of the above linear wrinkles. For instance, when a light source such as an electric bulb, etc. is viewed through the PBT film having linear wrinkles, one light streak with substantially the same width as the light source is observed around the light source in a direction perpendicular to the linear wrinkles. Accordingly, a combination of the PBT film having linear wrinkles and a light source provides ornamental illumination lights, etc. There is a large light diffraction/scattering effect in laminate films obtained by laminating pluralities of the PBT films having linear wrinkles such that their linear wrinkles are directed differently. Such laminate films may be useful for as transparent films, which are laminated with electromagnetic-wave-shielding layers to form transparent, electromagnetic-wave-shielding films. Further, laminate films per se comprising the PBT film having linear wrinkles may be used as electromagnetic-wave-shielding films. Particularly when pluralities of the PBT films having linear wrinkles formed in a wave plate shape are laminated in a honeycomb structure, it is presumed that the resultant laminate has larger light diffraction/scattering effect and higher transparent electromagnetic wave shielding. Such honeycomb structures may be useful as sound-shielding members.

### [3] Shape-memory polybutylene terephthalate laminate film

The shape-memory PBT laminate film of the present invention comprises (a) a layer of the PBT film obtained by the production method of the present invention, and (b) at least one selected from the group consisting of a paper sheet, another resin film and a metal foil (referred to simply as "another film or film laminate").

### (I) Layer structure

### (1) Polybutylene terephthalate film

The PBT film is obtained by the production method described in [1] above. Though not particularly restrictive, the thickness of the PBT film is preferably about 5 to 50 µm, more preferably about 8 to 30 µm for practical applications.

### (2) Another film or film laminate

### (a) Paper sheet

When the shape-memory PBT laminate film is used for lids for instant food containers, it preferably has a layer composed of a paper sheet as a layer for providing dead-folding characteristics. The types of papers for the paper sheet layer are not restricted, but may include synthetic papers. The thickness of the paper sheet layer is preferably about 60 to 110 g/m², more preferably about 75 to 90 g/m². When the thickness of the paper sheet is less than about 60 g/m², the paper sheet is easily foldable, failing to provide sufficient dead-folding characteristics. On the other hand, even when the thickness of the paper sheet is made more than about 110 g/m², there is no further improvement in dead-folding characteristics, resulting in only cost increase.

### (b) Sealant film

When the shape-memory PBT laminate film is used for lids for instant food containers, it has a sealant film heat-sealed to an upper flange of a container body. The sealant film may be formed by a polyethylene film, an unstretched polypropylene film, an ionomer film, a polystyrene film, etc. In order that a lid is easily peeled from the container body, the sealant film is preferably easy-to-peel. For this purpose, the sealant film preferably has relatively weak heat adhesiveness. Materials for the heat seal may be known hot melts.

Usable as the sealant films are, for instance, a polyethylene base film on the side of the paper sheet, and a laminate film with a low-molecular-weight polyethylene film on the side of the upper flange of the container body. The thickness of this polyethylene base film is preferably about 10 to 40 µm, more preferably about 20 to 30 µm. The thickness of the low-molecular-weight polyethylene film is preferably about 5 to 20 µm, more preferably about 7 to 15 µm. Such laminating polyethylene film is, for instance, 760FD commercially available from Toray Plastic Films Co., Ltd. Also usable as the sealant film is a film made of a mixture comprising an ethylene-vinyl acetate copolymer (EVA) and polyethylene. In the film made of this mixture, the polyethylene is preferably linear low-density polyethylene (LLDPE). The thickness of the film made of this mixture is also preferably about 10 to 40 µm, more preferably about 20 to 30 µm. The thickness of the hot-melt layer is preferably 10 to 50 µm, more preferably 20 to 40 µm.

A usable sealant film is also disclosed in Japanese Patent Application 2002-183197. The sealant film disclosed in Japanese Patent Application 2002-183197 is made of a resin composition comprising a linear ethylene-α-olefin copolymer of ethylene and an α-olefin having 3 to 18 carbon atoms, which has a density (JIS K6922) of 0.870 to 0.910 g/cm³, and MFR of 1 to 100 g/10 minutes (JIS K6921, at 190°C and under a load of 2.16 kg), and polystyrene. Whichever polyethylene or polystyrene is used for the seal surface of the container body, the lid of the present invention comprising this sealant film can form a multi-sealant layer having both sealability and easy-to-open characteristic when heat-sealed to the seal surface of the container body.

### (c) Rigid film

To increase the rigidity of the shape-memory PBT laminate film, it may have a rigid film. The rigid film may be a PET film, a biaxially stretched polypropylene film (OPP film), a nylon film, etc. The use of a monoaxially orientated PET film or a PET film biaxially orientated to different degrees as the PET film is advantageous when the shape-memory PBT laminate film should be easy-to-tear. The monoaxially orientated PET film or the PET film biaxially orientated to different degrees may be, for instance, "Emblet PC" commercially available from Unitika Ltd.

### (d) Light-screening ink layer

When light screening is needed, the shape-memory PBT laminate film is provided with a light-screening ink layer or a metal foil layer. The light-screening ink is not particularly restrictive, as long as it is an ink containing a black or dark-color pigment or dye such as carbon black. The use of the light-screening ink layer makes it possible to avoid adverse effect on environment at the time of incineration. It also makes it possible to detect foreign metallic materials by a metal detector after sealing when the shape-memory PBT laminate film is used for a lid for an instant food container. This further improves the safety of instant food, and extremely decreases an examination cost because the metal detector can be utilized. When the shape-memory PBT laminate film having a metal foil layer is used for a lid for an instant food container, the metal foil is preferably an aluminum foil. The formation of an aluminum foil layer can provide excellent light screening, gas barrier, odor retention, etc.

Though depending on the concentration of black pigment or dye in the ink, the light-screening ink layer may generally have such thickness as sufficiently cutting ultraviolet rays and visible rays. The thickness of the aluminum foil is preferably 3 to 15 µm, more preferably 7 to 12 µm.

### (3) Examples of layer structure

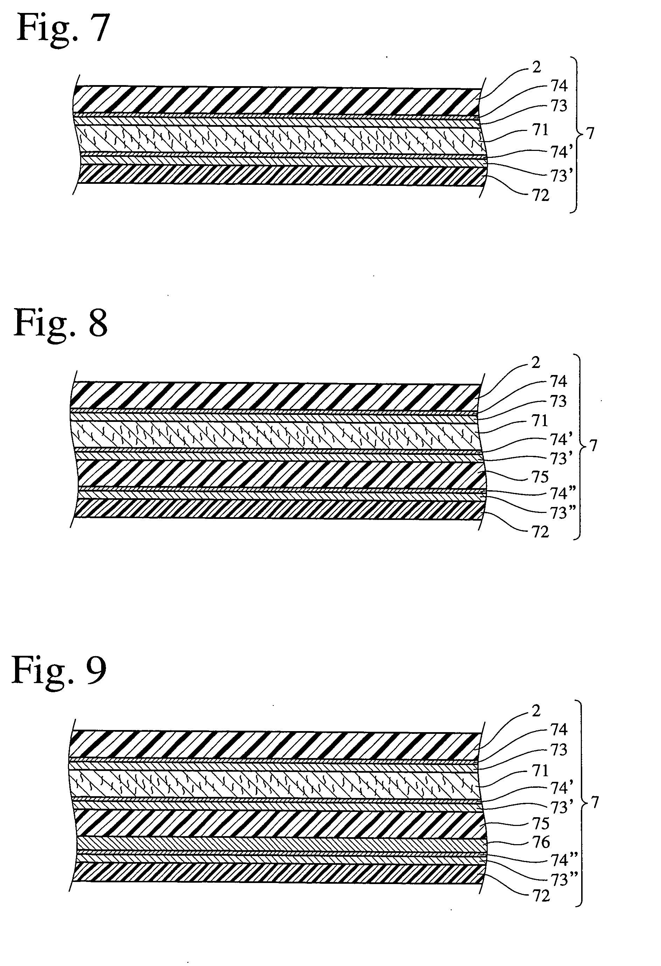

Figs. 7 to 10 illustrate various layer structures of the shape-memory PBT laminate film used as package sheets for lids for instant food containers. The laminate film 7 shown in Fig. 7 has a basic layer structure comprising a PBT film 2, a paper sheet 71 and a sealant film 72. There are an adhesive layer (I) comprising an adhesive layer 74 and an extrusion-laminated polyethylene layer (I) 73 between the PBT film 2 and the paper sheet 71, and an adhesive layer 74' and an extrusion-laminated polyethylene layer (II) 73' between the paper sheet 71 and the sealant film 72. In the case of the layer structure shown in Fig. 7, the thickness ratio of an outer layer comprising the PBT film 2 and the adhesive layer (I) (73 and 74) to an inner layer comprising the adhesive layer (II) (73' and 74') and the sealant film 72, which is an outer layer/inner layer thickness ratio, is preferably 100/35 to 100/100. Within this range, the PBT film 2 can effectively exhibit curlability and dead-folding characteristics. The terms "outer" and "inner" used herein mean the outside and inside of a lid, when the shape-memory PBT laminate film is used for the lid for an instant food container, etc.

Fig. 8 shows an example in which a rigid film 75 is inserted between the paper sheet layer 71 and the sealant film 72 to increase the rigidity of the shape-memory PBT laminate film. In Fig. 8, 73" represents an extrusion-laminated polyethylene layer (III), and 74" represents an adhesive layer (III).

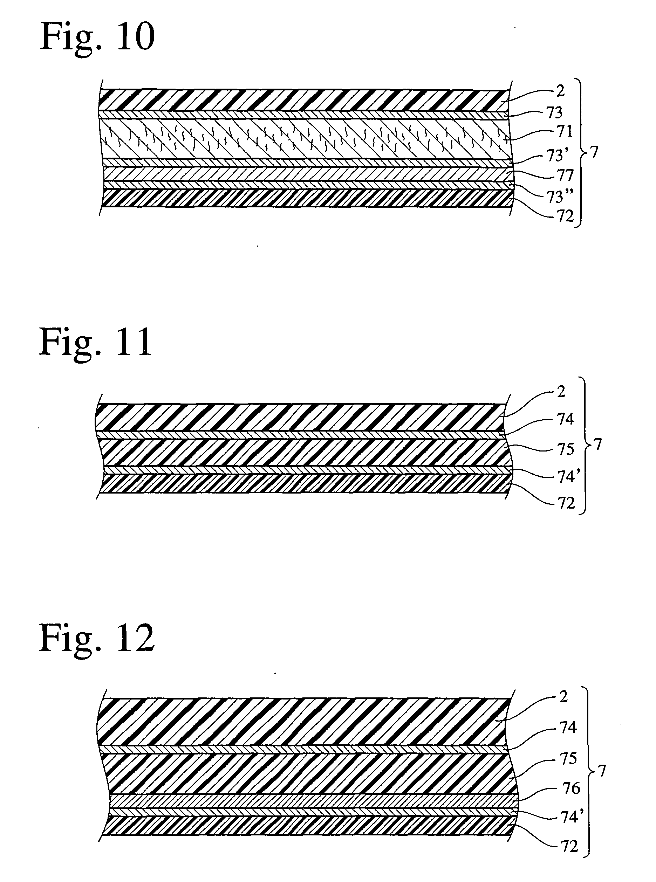

Fig. 9 shows an example in which a light-screening ink layer 76 is added inside the polyethylene terephthalate layer 7 to impart good light screening. The light-screening ink layer 76 is preferably printed on the polyethylene terephthalate (PET) film in advance. The light-screening ink layer 76 may also be formed on the inner surface of the PBT film layer 2, or on a surface of the paper sheet layer 71 (for instance, an inner surface of the paper sheet 71). The laminate film shown in Fig. 10 comprises a metal foil layer 77 as a light-screening layer.

Figs. 11 and 12 illustrate examples of the layer structure shape-memory PBT laminate film, which is used as a package sheet for a lid for a container for semisolid food such as jelly, pudding, etc. The laminate film shown in Fig. 11 has a basic structure comprising a PBT film layer 2, a rigid film 75 and a sealant film 72. There are an adhesive layer (for instance, hot-melt layer) 74 between the PBT film layer 2 and the rigid film 75, and an adhesive layer (for instance, hot-melt layer) 74' between the paper sheet 71 and the sealant film 72. Fig. 12 shows an example, in which a light-screening ink layer 76 is formed on the inner surface of the rigid film 75 to impart good light screening.

Because the lid for a container for semisolid food is not required to have resealability after pouring hot water, unlike lids for instant food containers, it sometimes does not have a paper sheet or an aluminum foil having strong dead-folding characteristics. However, if only two layers of the PBT film and the polyethylene film were adhered to each other, the resultant laminate film would be likely to have insufficient shape recoverability, because deformation is easily absorbed by the polyethylene film when the PBT film is caused to recover the first shape. Accordingly, in the case of producing a shape-memory PBT laminate film having a PBT film layer and a polyethylene film layer, it is preferable to insert the above rigid film between the PBT film layer and the polyethylene film layer.

### (II) Production method of shape-memory polybutylene terephthalate laminate film

The production method of the shape-memory PBT laminate film will be explained in detail below referring to the drawings.

### (1) First production method

The first production method of the shape-memory PBT laminate film comprises the steps of (a) subjecting a laminate film of the PBT film and another film or film laminate to a shaping treatment (cold working) at a temperature T₁ equal to or lower than the Tg of the PBT, while maintaining the first shape; (c) deforming the shaped laminate film to a second shape at a temperature T₂ higher than the Tg; and (c) cooling it to a temperature T₃ equal to or lower than the Tg, so that it is fixed to the second shape.

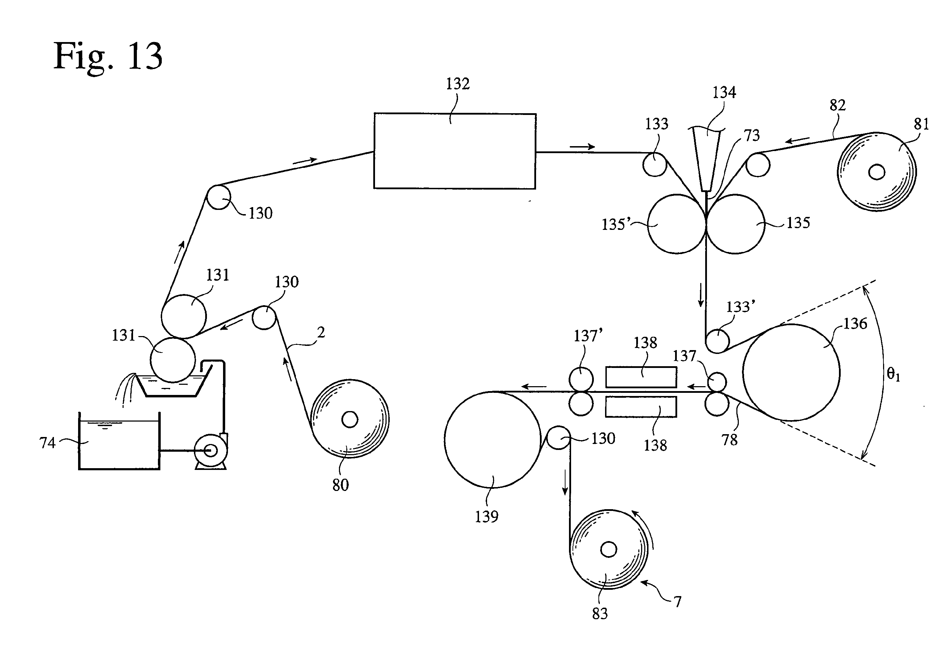

Explanation will be made below taking for example a case where the first shape is a curled shape, and the second shape is a flat shape. Fig. 13 shows one example of an apparatus for producing the shape-memory PBT laminate film. After passing a guide roll 130, the PBT film 2 unwound from an original PBT film wound around a reel 80 is coated with an adhesive (for instance, hot-melt adhesive) 74 on one surface by gravure rolls 131, 131, and the resultant adhesive layer is dried by a drying furnace 132. The PBT film 2 passes a pressure-controlling roll 133 and then between a cooling roll 135 and a rubber roll 135', so that it is laminated with another film or film laminate 82 unwound from a reel 81 via a molten polyethylene 73 extruded from a die 134, in such a manner that the molten polyethylene 73 faces the adhesive layer of the PBT film 2 (extrusion lamination). The resultant laminate film is subjected to a shaping treatment at a temperature T₁ equal to or lower than the Tg of PBT, while being conveyed by a cold-working roll 136. This imparts curlability to the PBT film layer in the laminate film. The curled laminate film 78 is deformed flat between two nip rolls 137, 137', while rapidly annealing it at a temperature T₂ higher than Tg by a heater 138. The laminate film 10 is then brought into contact with a cooling roll 139, so that it is cooled to a temperature T₃ equal to or lower than the above Tg. This fixes the laminate film to a flat shape. Thereafter, the curlable laminate film is wound around a reel in an uncurling direction, to provide a wound film 83 (shape-memory PBT laminate film 7). Different from the dead-folding characteristics by which the shape-memory PBT laminate film 7 can be kept in a bent state, the curlability is a property that when the shape-memory PBT laminate film 7 is exposed to a temperature equal to or higher than the temperature at which it has been curled, it can recover a curled shape from the second shape (flat shape, oppositely curled shape, etc.) given after curling, namely the shape-memory PBT laminate film 7 can be bent.

The cold-working temperature T₁, which should be Tg of PBT or lower, is preferably 35°C or lower, more preferably 15 to 25°C. The temperature T₃, at which the curlable laminate film 78 is cooled after annealing, should be the above Tg or lower, and is preferably 15 to 25°C. The PBT film generally has Tg of about 20 to 45°C.

The annealing treatment for deforming the curlable laminate film flat at a temperature T₂ higher than Tg should be carried out to such an extent that the curlability provided by the cold working does not disappear. Accordingly, the temperature T₂ is preferably higher than 45°C and 65°C or lower, to which the laminate film is rapidly heated, deformed and then annealed for 30 to 60 seconds. A tension of 5 to 10 kgf/m (width) is applied to the laminate film to keep it flat between two nip rolls 137, 137'. After the annealing treatment at a temperature T₂, the laminate film is preferably rapidly cooled to a temperature T₃. In Fig. 13, the curlable laminate film 78 is heated on both surfaces by heaters 138, 138, the heater 138 may be disposed only on the side of the PBT film layer of the curlable laminate film 78. A heating air ejected from the heater 138 may be blown onto the PBT film layer of the curlable laminate film 78 by a nozzle.

In the embodiment shown in Fig. 13, after the curlable laminate film 78 is cooled to a temperature T₃, it is wound in an uncurling direction with another film or film laminate layer inside. To avoid that the curlability given by the cold working disappears, and to suppress the recovery of the curled shape as much as possible, the winding temperature and the temperature for storing the laminate film in a wound state are preferably near the temperature T₁. Because such temperatures can keep the shape-memory PBT laminate film 7 in a flat state, the curlable laminate film 78 unwound from the wound film 83 (shape-memory PBT laminate film 7) is substantially flat.

When the shape-memory PBT laminate film is used for lids for instant food containers and semisolid food containers, another film or film laminate laminated to the PBT film is constituted in advance such that the resultant shape-memory PBT laminate film has the layer structure described in [3] (I) (3) above. Another film or film laminate 82 may be formed by an extrusion lamination method or a dry lamination method, though the extrusion lamination method is more preferable.

As shown in Fig. 13, the winding of the laminate film around the cold-working roll 136 is preferably such that an angle θ₁ between the winding and unwinding directions of the laminate film is in a range of 45° to 60°, to impart sufficient curlability to the PBT film 2. To set the angle θ₁ at the desired value, the positional relation of the cold-working roll 136 to the pressure-controlling roll 133' should be properly adjusted. The cold-working roll 136 preferably has a diameter of 20 to 80 cm to impart sufficient curlability to the PBT film 2. The peripheral speed of the cold-working roll 136 is usually 30 to 100 m/minute.

When the PBT film 2 and the another film or film laminate 82 are caused to pass between the cooling roll 135 and the rubber roll 135' for adhesion, a tension of 4 kgf/m (width) or more is usually applied to the PBT film 2 by the pressure-controlling roll 133. Particularly when a tension of 10 to 20 kgf/m (width) is applied to the PBT film 2, the PBT film 2 can be stretched to an elastically shrinkable degree in a longitudinal direction while being adhered to another film or film laminate 82. This makes it possible to adhere the PBT film 2 to another film or film laminate 82 in a state where the elongated PBT film 2 keeps an elastic recovery force. The passage "in a state where the elongated PBT film 2 keeps an elastic recovery force" means a state where the PBT film 2 keeps a force to shrink to the original shape when a force to fix the elongation is removed. This state further improves the curlability of the shape-memory PBT laminate film 7. The passage "stretched to an elastically shrinkable degree" generally means that the PBT film is stretched by about 1 to 3% to such an extent that no wrinkle appears on the PBT film.

Though another film or film laminate 82 is adhered to only one surface of the PBT film 2 in the embodiment shown in Fig. 13, the films or film laminates 82 may be adhered to both surfaces of the PBT film 2 and then provided with curlability.

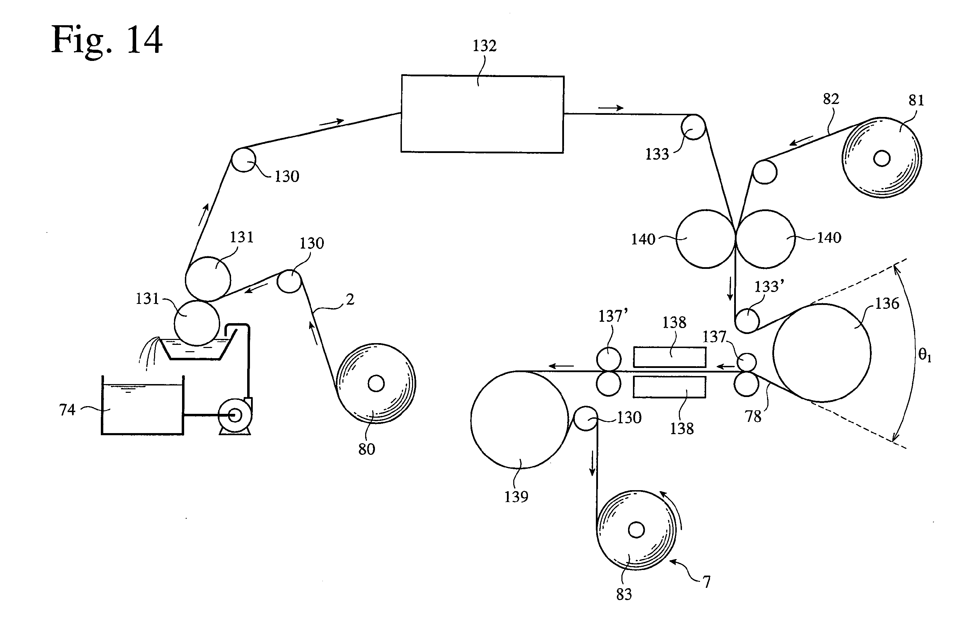

Fig. 14 shows another example of an apparatus for producing the shape-memory PBT laminate film. The same reference numerals are assigned to the same members or portions as in the embodiment shown in Fig. 13. This embodiment is the same as the embodiment shown in Fig. 13 except that the PBT film 2 is adhered to another film or film laminate 13 by a dry lamination method. The PBT film 2 provided with an adhesive layer passes between a pair of heat rolls 140, 140 via a pressure-controlling roll 133 with the adhesive layer attached to another film or film laminate 82. When strong adhesion strength is needed, it is preferable to adhere the PBT film 2 to another film or film laminate 82 by the extrusion lamination method shown in Fig. 13.

Next, explanation will be made, taking for example a case where the shape-memory PBT laminate film is in a tray shape as the first shape and in a flat shape as the second shape. Fig. 15 shows one example of an apparatus for producing such a shape-memory PBT laminate film. The same reference numerals are assigned to the same members or portions as in the embodiment shown in Fig. 13. First, another film or film laminate is adhered to one or both surfaces of the PBT film by an extrusion lamination method or a dry lamination method. The resultant laminate film 84 passes through pressure-controlling rolls 133, 133, and subjected to cold working by pressing a tray-shaped male mold 141 at the above temperature T₁, thereby intermittently forming a tray shape transferred from the press mold 141 in the laminate film 84. The shaped laminate film 85 is caused to pass between a pair of annealing rolls 142, 142, so that it is annealed at the above temperature T₂ to become substantially flat. It is then cooled to the above temperature T₃ by cooling means 143, 143. The resultant substantially flat laminate film 85 is laminated with a coating film 87 unwound from a reel 86, and wound around a roll 144 having the same shape as the press mold 141 to provide a wound film. The resultant laminate film does not have apparent deformation, with deformation along the outer shape of the press mold 141 disappearing. The PBT film 2 is cold-worked at a temperature T₁ for 10 to 60 seconds, while being pressed by the press mold 141. Though the tray-shaped press mold 141 is used in the embodiment shown in Fig. 15, any press mold for memorizing a desired shape may properly be used.

### (2) Second production method

The second production method of a shape-memory PBT laminate film comprises the steps of (a) (i) subjecting a laminate film comprising a PBT film to a shaping treatment at a temperature T₄ higher than Tg and lower than the melting point while keeping a first shape, or (ii) subjecting the PBT film to a shaping treatment at the temperature T₄ while keeping a first shape and then bonding it to another film or film laminate to form a laminate film having a first shape, (b) cooling the resultant shaped laminate film to a temperature T₅ equal to or lower than Tg to fix it to the first shape, (c) deforming the shaped laminate film to a second shape at a temperature T₆ higher than Tg and lower than the temperature T₄, and (d) cooling the laminate film to a temperature T₇ equal to or lower than Tg to fix it to the second shape.

Because the PBT resin has Tg of 22 to 45°C, close to room temperature, it is easily heated to Tg or higher and cooled to lower than Tg. In addition, because the PBT resin has a melting point as high as about 230°C, there is a wide temperature range between Tg and the melting point, resulting in a large difference between the temperature T₄ and the temperature T₅. Accordingly, the above operations (A) to (D) can be easily conducted. Explanation will be made below taking for example a case where the first shape is a curled shape, and the second shape is a flat shape.

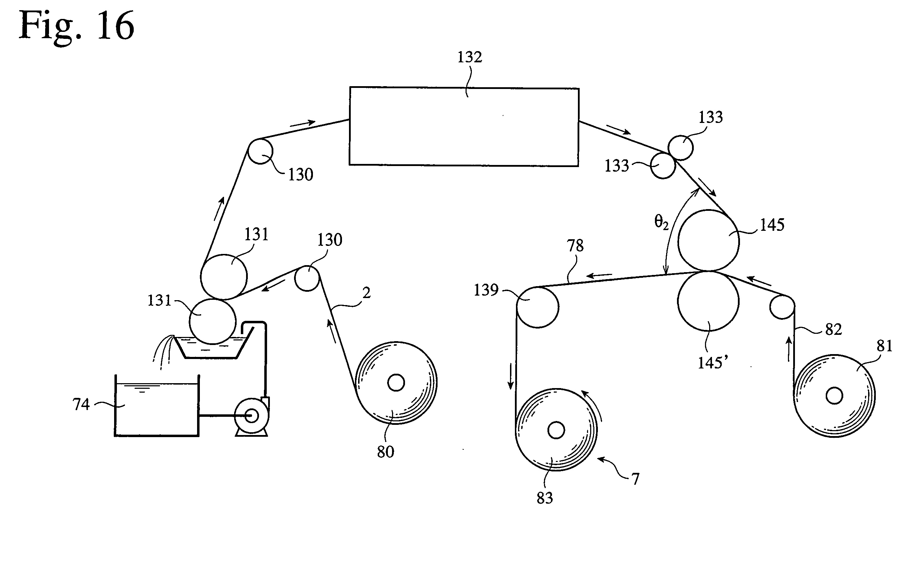

Fig. 16 shows an example of an apparatus for producing the shape-memory PBT laminate film by the second method. In this embodiment, the shaped PBT film provided with curlability in advance is adhered to another film or film laminate. This embodiment is the same as the embodiment shown in Fig. 13, until the steps of coating the PBT film 2 with an adhesive 74 on one surface and drying the resultant adhesive layer in a drying furnace 132. As shown in Fig. 16, the PBT film 2 after drying the adhesive layer is conveyed by pressure-controlling rolls 133 and then by a shaping heat roll 145, so that it is treated to have curlability at the above temperature T₄ with a surface having no adhesive layer in contact with the heat roll 145. Thereafter, it is caused to pass between the heat roll 145 and a roll 145' in contact therewith for adhesion, with another film or film laminate 82 attached to the adhesive layer of the PBT film 2. The resultant curlable laminate film 78 is brought into contact with a cooling roll 139 so that it is cooled to a temperature T₅ equal to or lower than the above Tg, and then wound around a reel in an uncurling direction to provide a wound film 83. The resultant wound film 83 is subjected to a heating treatment at a temperature T₆ higher than the above Tg and lower than temperature T₄, and then cooled to a temperature T₇ equal to or lower than the above Tg to provide the shape-memory PBT laminate film 7. After making the wound film 83, it is heat-treated at the temperature T₆, and then cooled to the temperature T₇ so that the above laminate film does not have an apparent curled shape. A laminate film substantially flat on appearance is thus obtained. The means for heating or cooling the wound film 83 is not restrictive; for instance, a method of introducing the wound film 83 into a bath and heating the bath by a heater therearound, and a method of cooling it by a cooling means.

The heating temperature T₄ at the heat roll 145 should be a temperature higher than the Tg of PBT and lower than the melting point of PBT, and it is preferably 75 to 100°C, more preferably 90 to 100°C. The cooling temperature T₅ at the cooling roll 139 should be a temperature equal to or lower than the above Tg, and it is preferably 40°C or lower. The cooling of the curlable laminate film 78 may be conducted by using a cooling air instead of the cooling roll 139. The heating temperature T₆ of the wound film 83 should be higher than the above Tg and lower than the temperature T₄, and it is preferably 45 to 65°C, and more preferably 45 to 50°C. The heating treatment at the temperature T₆ is preferably conducted for about 24 hours. The cooling temperature T₇ of the wound film 83 after the heating treatment should be the above Tg or lower, and it is preferably 40°C or lower. In the embodiment shown in Fig. 16, the curlable laminate film is wound in an uncurling direction with another film or film laminate layer inside to make the second shape substantially flat. This efficiently makes the film flat.

The winding of the PBT film 2 around the heat roll 145 is preferably such that an angle θ₂ between the winding direction of the PBT film 142 shown in Fig. 16 and the unwinding direction is in a range of 45° to 60°. With this angle, sufficient curlability is given to the PBT film 2. To set the angle θ₂ at the desired value, the positional relation of the heat roll 145 to the pressure-controlling rolls 133, 133 should be properly adjusted. The heat roll 145 preferably has a diameter of 60 to 80 cm to impart sufficient curlability to the PBT film 2. The peripheral speed of the heat roll 145 is usually 30 to 100 m/minute.

As described in (1) above with respect to the first production method, when the PBT film 2 and another film or film laminate 82 are caused to pass between the heat roll 145 and the abutting roll 145' for adhesion, a tension of 4 kgf/m (width) or more is usually applied to the PBT film 2 by a pair of pressure-controlling rolls 133, 133. Like the first production method, a tension of 10 to 20 kgf/m (width) is preferably applied to the PBT film 2.

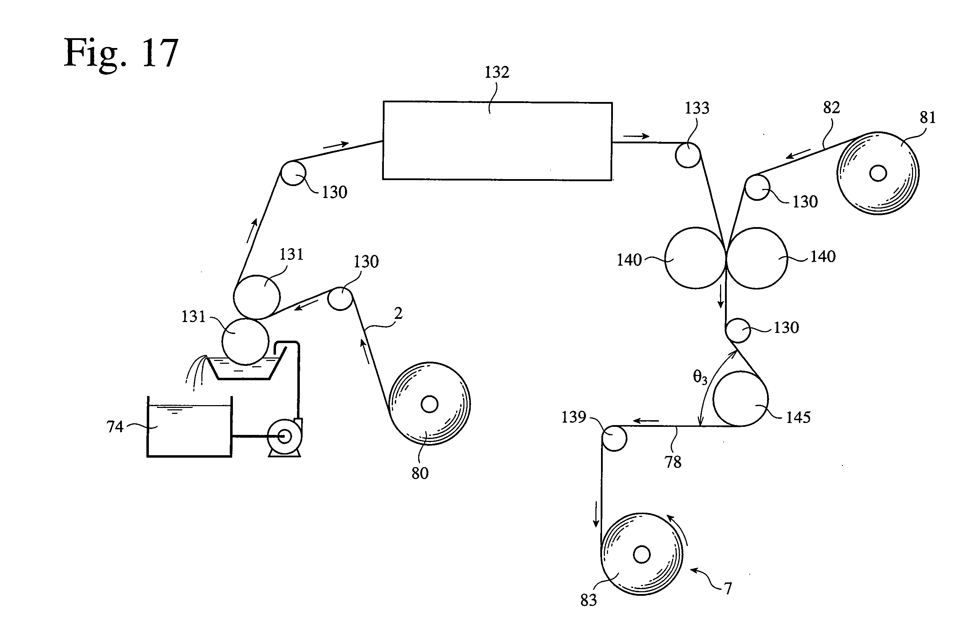

Fig. 17 shows another example of an apparatus for producing the shape-memory PBT laminate film by the second method. The same reference numerals are assigned to the same members or portions as in the embodiment shown in Fig. 13. In this embodiment, after producing a laminate film by adhering the PBT film to another film or film laminate in advance, the PBT film layer is provided with curlability. This embodiment is the same as the embodiment shown in Fig. 14, until the step of adhering the PBT film 2 to another film or film laminate 82 by a pair of heat rolls 140, 140. The resultant laminate film is shaped at a temperature T₄ higher than the Tg of PBT and lower than the melting point of PBT while being conveyed by the heat roll 145, thereby imparting curlability to the PBT film layer of the laminate film. The resultant curlable laminate film 78 is brought into contact with the cooling roll 139 so that it is cooled to a temperature T₅ equal to or lower than the above Tg, and then wound around a reel in an uncurling direction to provide a wound film 83. The resultant wound film 83 is heat-treated at a temperature T₆ higher than the above Tg and lower than the temperature T₄ as described above, and then cooled to a temperature T₇ equal to or lower than the above Tg to provide the shape-memory PBT laminate film 7.

In the embodiment shown in Fig. 17, the requirements of the temperatures T₄ to T₇ are the same as in the embodiment shown in Fig. 16. An angle θ₃ between the winding direction and the unwinding direction of the laminate film 78 is preferably in a range of 45° to 60°. Though another film or film laminate 82 is adhered to only one surface of the PBT film 2 in the embodiment shown in Fig. 17, it is possible to impart shape-memory characteristics after another film or film laminate 82 is adhered to both surfaces of the PBT film 2.

By the second production method, too, a shape-memory PBT laminate film that has a tray shape as the first shape and a flat shape as the second shape can be produced. Because a production apparatus therefor may be the same as shown in Fig. 15, it will be explained referring to Fig. 15. First, the PBT film is adhered to another film or film laminate to provide a PBT laminate film having another film or film laminate one or both surfaces of the PBT film. The resultant laminate film 84 passes through a pair of pressure-controlling rolls 133, 133, and heat-treated at a temperature T₄ higher than the Tg of PBT and lower than the melting point of PBT, while being intermittently pressed by a tray-shaped male mold 141 such that it is given a shape in accordance with the outer shape of the press mold 141. The shaped laminate film 85 is brought into contact with a cooling tray-shaped press mold or a cooling air downstream of the press mold 141 so that it is cooled to a temperature T₅ equal to or lower than the above Tg. It is then caused to pass between a pair of heat rolls 142, 142, so that it is heat-treated at a temperature T₆ higher than the above Tg and lower than the temperature T₄. Subsequently, it is cooled to a temperature T₇ equal to or lower than the above Tg by the cooling means 143, 143 to fix a flat shape. The heating treatment of the laminate film 84 at the temperature T₄ while being pressed by the press mold 141 may be 10 to 60 seconds.

### (III) Shape-memory polybutylene terephthalate laminate film

The shape-memory PBT laminate film obtained by the above first method substantially returns the first shape because of the shape recoverability at a temperature equal to or higher than T₁. It is not necessarily clear why the PBT film returns the first shape at a temperature equal to or higher than T₁ even though it is fixed to the second shape by the above annealing and cooling steps. However, it may be considered that strain is kept in the entanglement of polymer chains, for instance, by cold working at the temperature T₁, and that most of this strain is not relaxed by annealing at the temperature T₂ for a short period of time, so that the first shape is recovered at a temperature equal to or higher than T₁.

The shape-memory PBT laminate film obtained by the above second method substantially returns the first shape because of the shape recoverability at a temperature equal to or higher than T₄. It is not necessarily clear why the PBT film returns the first shape at a temperature equal to or higher than T₄, even though it is fixed to the second shape by the above thermal deformation and cooling steps. However, It may be considered that the PBT film is easily thermally shaped, for instance, at the temperature T₄ or higher because of a rubbery state, with its deformation fixed at the temperature T₅ because of a glassy state, and that though the deformation at the temperature T₄ is partially relaxed by the thermal deformation at the temperature T₆ so that PBT film is turned to have the second shape, it returns the first shape at the temperature T₄ or higher because the orientation of most molecular chains does not change.

The shape-memory PBT laminate films having shape recoverability to the first shape is useful as various package sheets. Particularly because the PBT laminate films having a curled shape memory produced by the method described in (2) above can be sufficiently curled when used for lids containing no metal foils such as an aluminum foil, etc. such lids are suitable as package sheets for instant food containers. In the production of an instant food container, the shape-memory PBT laminate film is punched out by a lid-sealing means, and the resultant lid is immediately heat-sealed to the container. At the heat-sealing step, a seal portion of the lid is usually heated to 120 to 160°C by a seal head of the lid-sealing means, and because heat is also transmitted to other portions than the seal portion of the lid, the lid is treated at a temperature equal to or higher than T₁ or T₄. Accordingly, the lid returns a curled shape, so that it is flat when sealed to the container, but curled when peeled from the container. Particularly when the PBT film is adhered to a paper sheet in an elongated state where the PBT film has an elastic recovery force as described above, the laminate film has further improved curlability.

### [4] Production method of container having lid composed of shape-memory polybutylene terephthalate laminate film

The production method of a container having a lid composed of a shape-memory PBT laminate film will be explained below. Because the shape-memory PBT laminate film 7 obtained by the method described in (2) above is made substantially flat on appearance in its production step and stored as a wound film 83, it is substantially flat on appearance when unwound. However, when the shape-recovering temperature is relatively low, when it is stored for a long period of time, or when it is exposed to room temperature in the hot summer time, etc., it sometimes gradually returns a curled shape during storing, or deflects toward the opposite direction to the memorized curled shape due to winding during storing.

The container with a lid composed of a shape-memory PBT laminate film is produced by punching out the shape-memory PBT laminate film having a memorized curled shape, and heat-sealing it to the container. However, unless the shape-memory PBT laminate film is substantially flat when unwound, it cannot be heat-sealed to the container, or even if possible, defective products with deflected lids are produced. Accordingly, in the production of the container with a lid, the shape-memory PBT laminate film, which is not flat when unwound, is made substantially flat immediately before heat-sealing.

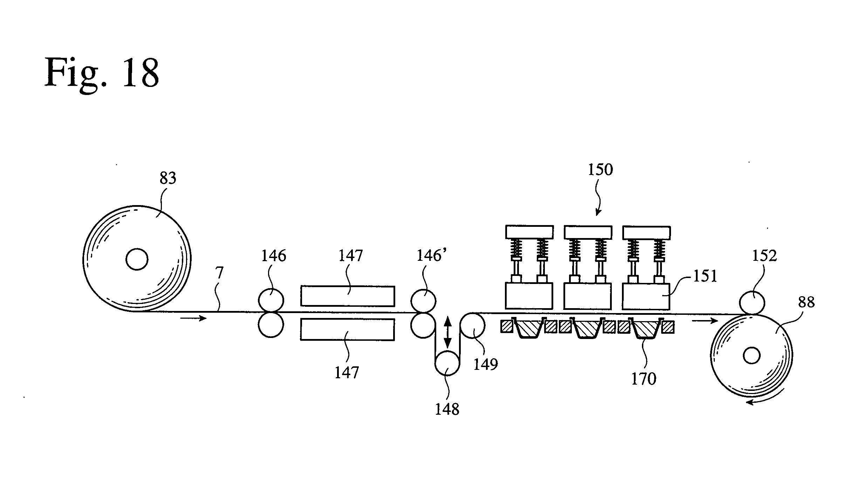

Fig. 18 shows one example of an apparatus for a container having a lid composed of a shape-memory PBT laminate film. The shape-memory PBT laminate film 7 unwound from the wound film 83 is annealed by heating it by heaters 147, 147 to a temperature T₈ higher than the Tg of PBT and pressing it between two nip rolls 146, 146', so that it becomes substantially flat on appearance. The substantially flat shape-memory PBT laminate film 7 is punched out and immediately heat-sealed to the container 170 by a lid-sealing means 150 having a seal head 151 moving up and down. If necessary, an inert gas may be blown into the container.

The annealing at the temperature T₈ is conducted to such an extent that the shape-memory PBT laminate film does not lose memorized curlability. Thus, the temperature T₈ is preferably 80 to 120°C, more preferably 90 to 100°C. The shape-memory PBT laminate film is rapidly heated to the temperature T₈ and kept flat for 30 to 60 seconds for annealing. A tension of 5 to 10 kgf/m (width) is applied to make the laminate film flat between the two nip rolls 146, 146'. The moving speed of the shape-memory PBT laminate film 7 is usually 30 to 100 m/minute. Though both surfaces of the shape-memory PBT laminate film 7 are heated by the heaters 147, 147 in Fig. 18, a heater 147 may be disposed only on the side of the PBT film layer when the shape-memory PBT laminate film 7 has the PBT film layer only on one side. A heating air ejected from the heater 147 may be blown by a nozzle onto the PBT film layer of the shape-memory PBT laminate film 7.

Because the punching of the lid and its heat sealing to the container 170 are conducted intermittently, a deflection-preventing roll 148 movable up and down is preferably disposed as shown in Fig. 18, such that the shape-memory PBT laminate film 7 is not deflected between the guide roll 149 and the abutting roll 152 to keep a constant tension. In Fig. 18, 88 represents a wound film of the shape-memory PBT laminate film 7 after punching out the lids.

During the heat sealing, in which a seal portion of the lid is usually heated to 120 to 160°C by the seal head of the lid-sealing means 151, heat is also added to other portions of the lid than the seal portion, so that the lid is treated at a temperature equal to or higher than T₁ or T₄. Accordingly, the lid returns the curled shape, so that it is curled when peeled form the container though it is flat while being sealed.

### [5] Container for food

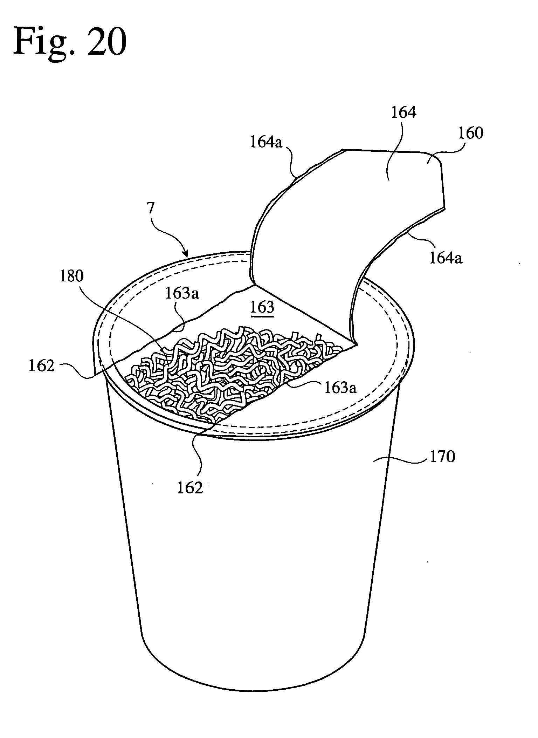

The lid for a container obtained by the production method described in [4] above exhibits a curled shape due to shape memory when peeled from the container. For instance, when the shape-memory PBT laminate film is used for the lid for an instant food container, as shown in Fig. 20, a flap formed by peeing the lid 7 from the container body 170 until a mark 161 with a tab 160 of the lid 7 gripped is sufficiently curled even if the lid 7 does not have an aluminum layer. Particularly when the PBT film is adhered to the paper sheet in an elongated state in which the PBT film has an elastic recovery force as described above, the resultant laminate film has further improved curlability. When the shape-memory PBT laminate film is used for a lid for an instant food container, its layer structure is preferably as shown in Figs. 7 to 10 as described in [3] (I) (3) above.

When the shape-memory PBT laminate film having a PBT film layer having linear scratches described below is used for a lid for an instant food container, as shown in Fig. 20, the formation of notches 162, 162 on both sides of the tab 160 makes it easy to partially open the lid 1. When the lid 7 is pulled toward the opposite side with the tab 160 of the lid 7 gripped by fingers, the lid 7 can be torn straight from the notches 162, 162, resulting in an opening 163 in the lid 7. The flap 164 formed by tearing is sufficiently kept curled. Accordingly, hot water can be poured into the container through the opening 163 without needing further handling.

When the flap 164 is returned to the original position after pouring hot water, jagged rupture portions 164a, 164a of the paper one or both sides of the flap 164 engage jagged rupture portions 163a, 163a of the paper at the opening 163, so that the flap 164 does not lift up. In this case, the opening 163 has a smaller area than that of the opening of a conventional full-open lid, and the flap 164 is kept engaging the opening 163. Accordingly, even if the container 170 erroneously falls, only a small amount of the hot water leaks. In Fig. 20, 180 represents dried noodle.

The container body 170 may be formed, for instance, by paper, synthetic resins such as foamed polystyrene, etc. The paper container body is advantageous in easy incineration and the generation of no gas exerting adverse effects on the environment by incineration. The foamed polystyrene container body is advantageous in excellent temperature-keeping properties. The shape of the container body 170 is not restricted to that depicted, but may be variously modified depending on the types of contents.

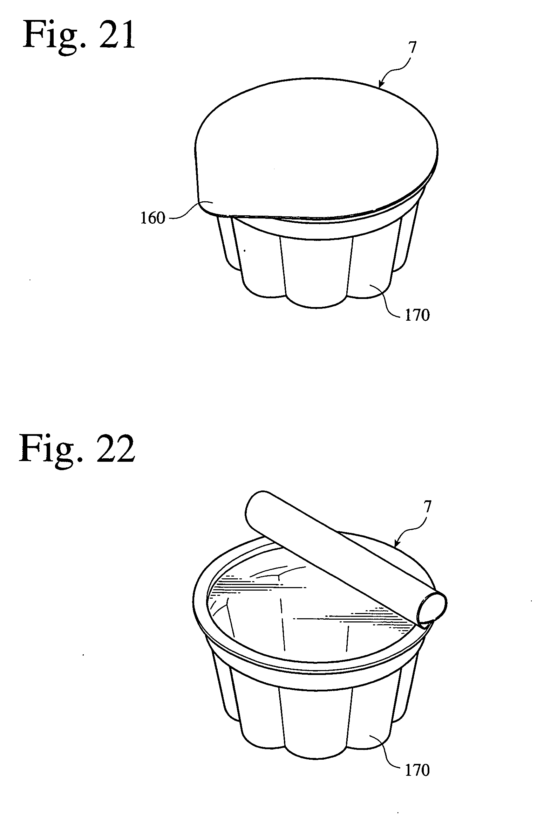

Figs. 21 and 22 show an example, in which the shape-memory PBT laminate film is used for a lid for a container for semisolid food such as jelly, pudding, etc. When the shape-memory PBT laminate film is used for the lid for a semisolid food container, its layer structure is typically as shown in Figs. 11 and 12 as described in [3] (I) (3) above. As shown in Fig. 21, the lid 7 in a state sealed to the container 170 is flat. However, because the lid 7 has recovered a curled shape when heat-sealed to the container 170, though flat on appearance, the lid 7 composed of the shape-memory PBT laminate film without the paper sheet and the aluminum foil is strongly curled because of the shape memory when peeled from the container 170, as shown in Fig. 22. The container body 170 can be made of synthetic resins such as polypropylene, polyethylene, etc. The shape of the container body 170 is not restricted to that depicted, but may be variously modified depending on the types of contents. The lids having such strong curlability are suitable as lids for portion packs of milk for coffee, etc.

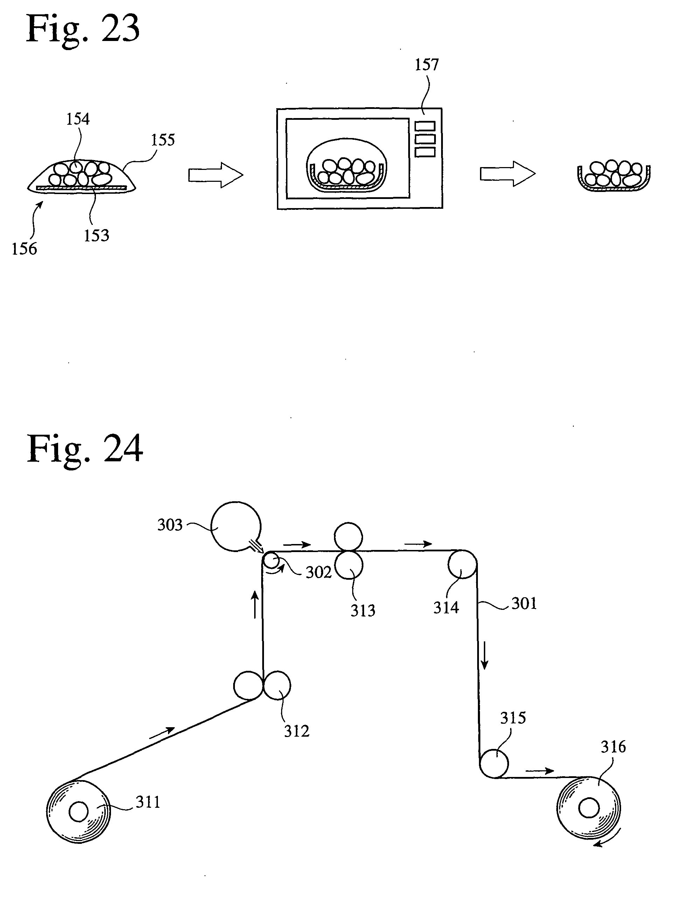

When the shape-memory PBT laminate film memorizing a tray shape described in [3] (II) above is cut to a unit length of each tray shape while being flat, it can be used as a food tray as it is. As shown in Fig. 23, for instance, after an instant frozen food 154 is poured into the resultant food tray 153, it is covered with a wrapping film 155 to provide a wrapped item 156. As shown in Fig. 23, the wrapped item 156 is heated by a microwave oven 157, etc. to eat. At this time, the food tray 153 is heated at a temperature equal to or higher than the temperature T₁ or T₄ for a proper period of time, so that the food tray 153 returns the tray shape given by the press mold 141. The shape-memory PBT laminate film thus used for the food tray 153 is substantially flat with a small volume in a state of the wrapped item 156, convenient for transportation and display, and returns the tray shape for ease to eat by a heating treatment.

The wrapping film 155 of the food tray 153 is preferably provided with a lot of substantially parallel linear scratches on at least one surface by the method described below. The substantially parallel linear scratches provide the wrapping film 155 with easy-to-straight-tear characteristics in one direction regardless of its orientation, so that the wrapping film 155 can be torn straight along the linear scratches from any point. Thus, the wrapping film 155 can be easily partially open when to eat. Because such linear scratches do not penetrate the film, the wrapping film 155 has an excellent gas barrier after provided with the linear scratches.

### [6] Formation of linear scratches on film

To impart the easy-to-straight-tear characteristics to the shape-memory PBT laminate film, at least one of the PBT film, the rigid film and the sealant film is preferably provided with a lot of substantially parallel linear scratches formed by the method described below on the entire surface. Such linear scratches make it possible to easily tear the shape-memory PBT laminate film straight. Accordingly, when the shape-memory PBT laminate film is used as package sheets for lids for instant food containers, for instance, the lids can be partially opened. Such linear scratches are preferably formed particularly on the PBT film. The linear scratches can be formed by bringing a continuously running film into contact with a means having a lot of fine projections for forming linear-scratches. The method for forming linear scratches will be explained below in detail referring to the drawings.

### (I) Formation of linear scratches on film in progressing direction

Fig. 24 shows one example of an apparatus for forming linear scratches on the film 301 in a progressing direction. Fig. 24 shows an example, in which a roll 302 having a lot of fine projections on the surface (hereinafter referred to as "pattern roll") is used as a means for forming linear scratches, and a nozzle 303 capable of blowing air is used as a film-pressing means. A film 301 unwound from a reel 311 having an original film passes between nip rolls 312 and is brought into contact with a pattern roll 302 to be provided with linear scratches. The resultant film having easy-to-straight-tear characteristics passes through nip rolls 313 and guide rolls 314 and 315, and is then wound around a winding reel 316.

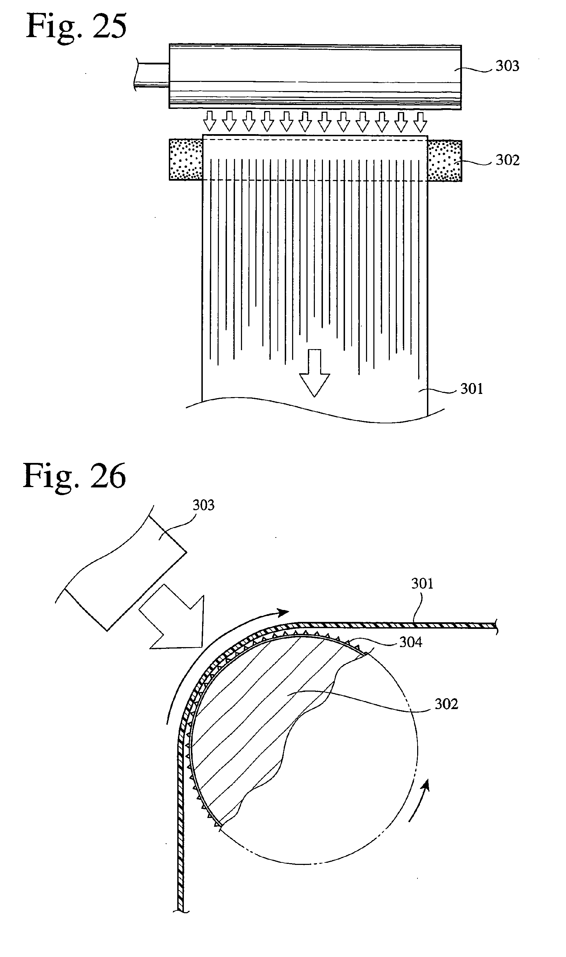

As shown in Fig. 25, the pattern roll 302 is fixed with its rotation axis in parallel with the width direction of the film 301, and has a longer longitudinal length than the width of the film 301, such that the film 301 is in sliding contact with the pattern roll over the entire width.

The nip rolls 312 and 313 disposed upstream and downstream of the pattern roll 302 as the tension-controlling rolls give a tension to the film 301 moving over the pattern roll 302. Further as shown in Fig. 25, the air at a predetermined pressure is blown from a nozzle 303 disposed on the opposite side of the pattern roll 302 onto the film 301 in sliding contact with the pattern roll 302, so that the film 301 is brought into contact with the sliding surface of the pattern roll 302 at a uniform force. Thus, uniform linear scratches are formed on the surface of the film. Using the nozzle 303, the film 301 is pressed onto the pattern roll 302, such that non-uniformity in contact on the roll-sliding surface due to the uneven thickness of the film 301 can be suppressed.

Because the pattern roll 302 has a lower peripheral speed than the progressing speed of the film 301, it is preferable to rotate the pattern roll 302 in an opposite direction to the progressing direction of the film 301. This can prevent wrinkles from being generated on the film and dust generated by the formation of linear scratches from remaining on the surface of the pattern roll 302, thereby forming linear scratches of proper length and depth. In the present invention, the progressing speed of the film 301 is preferably 10 to 500 m/minute. The peripheral speed of the pattern roll 302 (rotation speed in an opposite direction to the progressing direction of the film 301) is preferably 1 to 50 m/minute.

Usable as the pattern roll 302 is, for instance, that described in JP 2002-59487 A. This has a structure having a lot of fine particles having Mohs' hardness of 5 or more attached to the surface of a metal roll by an electrodeposition method or by an organic or inorganic binder. The metal roll is made of iron, iron alloys, etc. The metal roll preferably has a plating layer of nickel or chromium. The fine particles having Mohs' hardness of 5 or more are, for instance, cemented carbide particles such as tungsten carbide, silicon carbide particles, boron carbide particles, sapphire particles, cubic boron nitride (CBN) particles, natural or fine synthetic diamond particles, etc. Fine synthetic diamond particles having large hardness and strength are particularly desirable. The particle size of the fine particles is properly determined depending on the depth and width of linear scratches formed. In the present invention, the fine particles desirably have a particle size of 10 to 100 µm with unevenness of 5% or less. How many fine particles are attached to the roll surface is properly selected such that the formed linear scratches have desired intervals. To form uniform linear scratches, the fine particles are preferably attached to 50% or more of the roll surface. A specific example of the pattern roll 302 may be a pattern roll having a lot of fine synthetic diamond particles fixed with a nickel electrodeposition layer to the surface of an iron roll at an area ratio of 50% or more. The outer diameter of the pattern roll 302 is preferably 2 to 20 cm, more preferably 3 to 10 cm.

The pattern roll 302 may also be a needle roll having metal needles embedded in the surface of a metal roll regularly in a lattice pattern with extremely small intervals. In addition to the pattern roll 302, the means for forming linear scratches may be a pattern plate having many fine particles having Mohs' hardness of 5 or more as described above on the surface of a plate body.

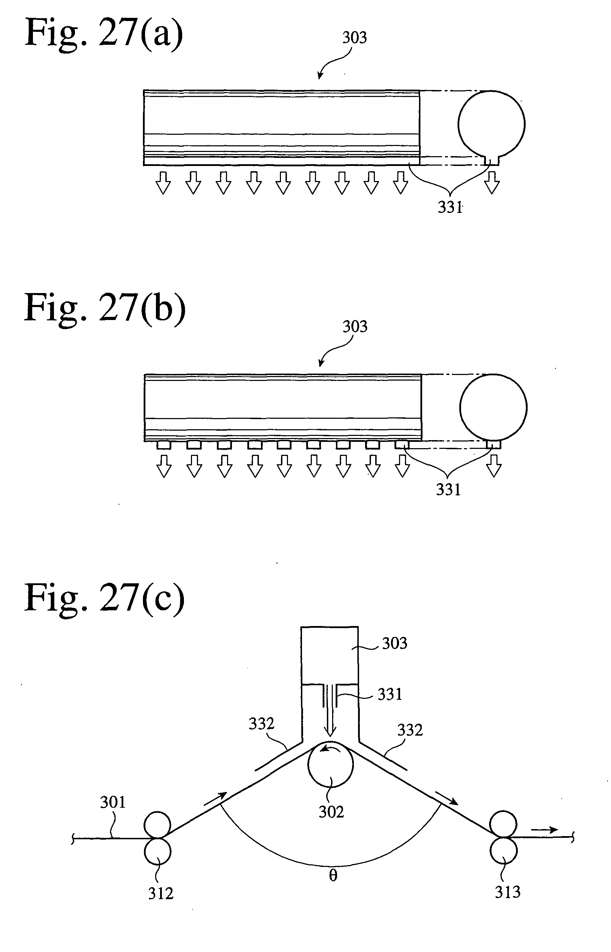

Fig. 26 shows that the film 301 is in sliding contact with the pattern roll 302 to form linear scratches. For instance, an edge of at least one fine particle 304 on the surface of the pattern roll 302 bites the roll-sliding surface, one long linear scratch is formed until the edge of the biting fine particle 304 separates from the roll-sliding surface, because the progressing speed of the film 301 is larger than the peripheral speed of the pattern roll 302 in an opposite direction as described above.

Usable in place of a nozzle having a strip-shaped blowing orifice 331 (the same as shown in Figs. 24 to 26) shown in Fig. 27(a) as the air-blowing means, a nozzle having pluralities of blowing orifices 331 shown in Fig. 27(b) may be used. In addition, when a compressed air is blown from a nozzle having a hood 332 covering the pattern roll 302 as shown in Fig. 27(c), the compressed air ejected from the blowing orifice 331 is not easily diffused until it reaches a position at which the film 301 is in sliding contact with the pattern roll 302, so that the contact force of the film 301 to the pattern roll 302 becomes further uniform on the roll-sliding surface. The pressure of the compressed air flow blown from such air-blowing means is preferably 4.9 to 490 kPa (0.05 to 5 kgf/cm²), so that the contact force of the film 301 to the pattern roll 302 becomes uniform on the roll-sliding surface. The more preferred pressure of the compressed air flow is 9.8 to 196 kPa (0.1 to 2 kgf/cm²). The distance from the blowing orifice 331 to the roll-sliding surface is preferably 10 to 50 cm. The compressed air needs only uniformly impinge onto a region covering at least a surface of the roll. However, if the blowing orifice 331 of the blower or the nozzle were larger than necessary, a too much amount of the compressed air is unpreferably needed to obtain a proper gas pressure.

The winding of the film 301 around the fixed pattern roll 302 is preferably conducted such that an angle θ between the winding direction of the film 301 and the unwinding direction of the film 301 is in a range of 60° to 170° as shown in Fig. 27(c). This makes the length and depth of linear scratches easily adjustable. The angle θ is preferably in a range of 90° to 150°. To set the angle θ at the desired value, the height position of the pattern roll 302 may be changed such that the positional relation of the pattern roll 302 to the nip rolls 312 and 313 are properly adjusted. Depending on how to wind the film 301 around the pattern roll 302 and the outer diameter of the pattern roll 302, a tension given to the film 301 by the nip rolls 312 and 313 and the pressure of the gas ejected from the nozzle 303 may be properly adjusted to obtain linear scratches with the desired length and depth. In the present invention, a tension (tension per width) given to the film by the nip rolls 312 and 313 is preferably in a range of 0.01 to 5 kgf/cm width.

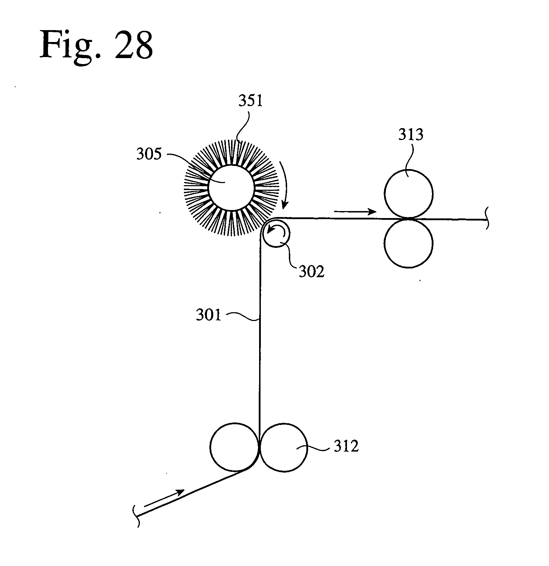

In place of the air-blowing means, a brush may be brought into sliding contact with the opposite side of the roll-sliding surface, to give a uniform contact force to the roll-sliding surface. The brush hairs are preferably movable on a sliding surface of the brush on the film 301 (hereinafter referred to as "brush-sliding surface" unless otherwise described), at a lower speed than the progressing speed of the film 301 in an opposite direction to the progressing direction of the film 301. Thus, as shown in Fig. 28, the brush is preferably a rotatable roll brush 305 having a lot of hairs radially extending from a brush shaft (rotation shaft), the brush shaft being fixed in parallel with the width direction of the film 301 and having a larger longitudinal length than the width of the film 301, such that the brush is in sliding contact with the film 301 in its entire width.

The outer diameter of the rotatable roll brush 305 is preferably 5 to 10 cm. The hairs 351 of the rotatable roll brush 305 preferably has a bending recovery ratio of 70% or more, a diameter of 0.1 to 1.8 mm, and a length of 1 to 5 cm. The hairs 351 of the rotatable roll brush 305 have a density of 100 to 500/cm² on the brush-sliding surface. The bending recovery ratio is determined as follows: First, two looped hair fibers having a length of about 26 cm are crossed like a chain with an upper loop fixed to a hook, and a load (g) as heavy as half of the denier of the hair fiber is applied to a lower loop for 3 minutes, and a sample having a length of about 3 cm is cut out of a pair of loops bent like pine leaves, and left to stand for 60 minutes. An open angle (θ₄) of the sample is measured to calculate the bending recovery ratio by the equation of (θ₄/180) x 100 (%). Though not particularly restrictive, the tip end of the hairs 351 is preferably substantially in a U-shape or in a tapered shape. The materials of the hairs 351 are preferably synthetic resins such as polypropylene, nylon, acrylic resins, polyethylene, etc., though not particularly restrictive.

The rotatable roll brush 305 is preferably in sliding contact with the film 301 at a pressure of 1 to 490 kPa (0.01 to 5 kgf/cm²) on the brush-sliding surface. The peripheral speed of the rotatable roll brush 305 (rotation speed in an opposite direction to the progressing direction of the film 301) is preferably 1 to 50 m/minute.

The length and depth of linear scratches are adjusted to obtain the desired level of the easy-to-straight-tear characteristics, by properly changing the moving speed of the film 301, the peripheral speed of the pattern roll 302, the size of the fine diamond particles 304, the outer diameter of the pattern roll, the gas pressure from the nozzle 303, the pressure of the rotatable roll brush 305, a tension given to the nip rolls 312 and 313, etc.

### (II) Formation of slanting linear scratches on film

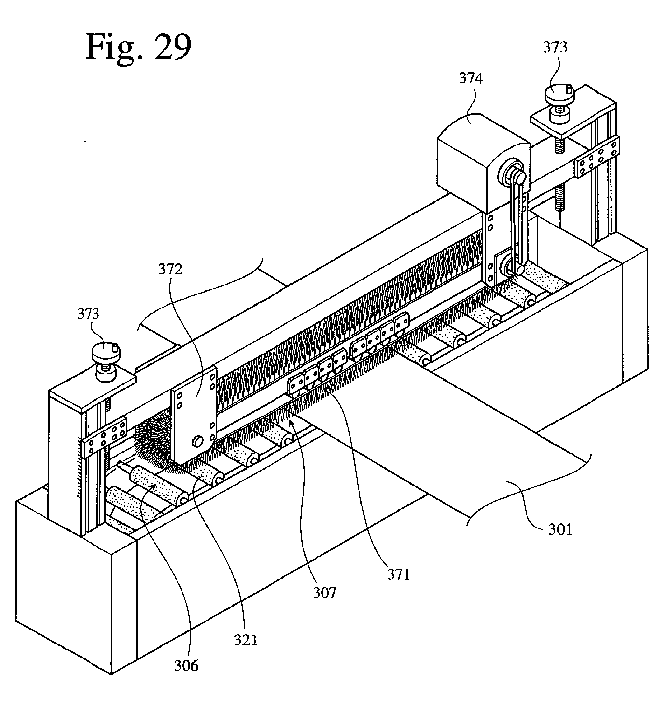

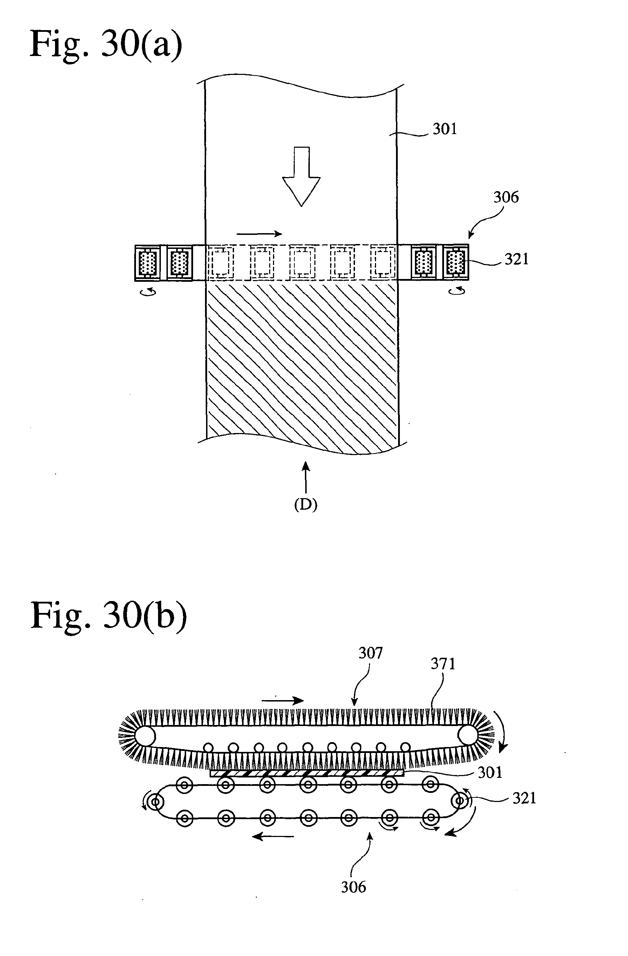

Fig. 29 shows one example of an apparatus for forming the linear scratches on the film 301 slantingly to the progressing direction of the film 301. The same reference numerals are assigned to the same members or portions as in Fig. 24. The apparatus shown in Fig. 29 comprises an endless pattern belt 306 comprising a lot of small pattern rolls 321 connected to each other as a means for forming linear scratches, and an endless brush 307 comprising a lot of hairs 371 implanted to an endless belt as a film-pressing means. Fig. 30(a) is a partial enlarged plan view showing the endless pattern belt 306 rotating in the width direction of the film 301 in the apparatus shown in Fig. 29, and Fig. 30(b) is a schematic cross-sectional view taken from the direction D in Fig. 30(a).

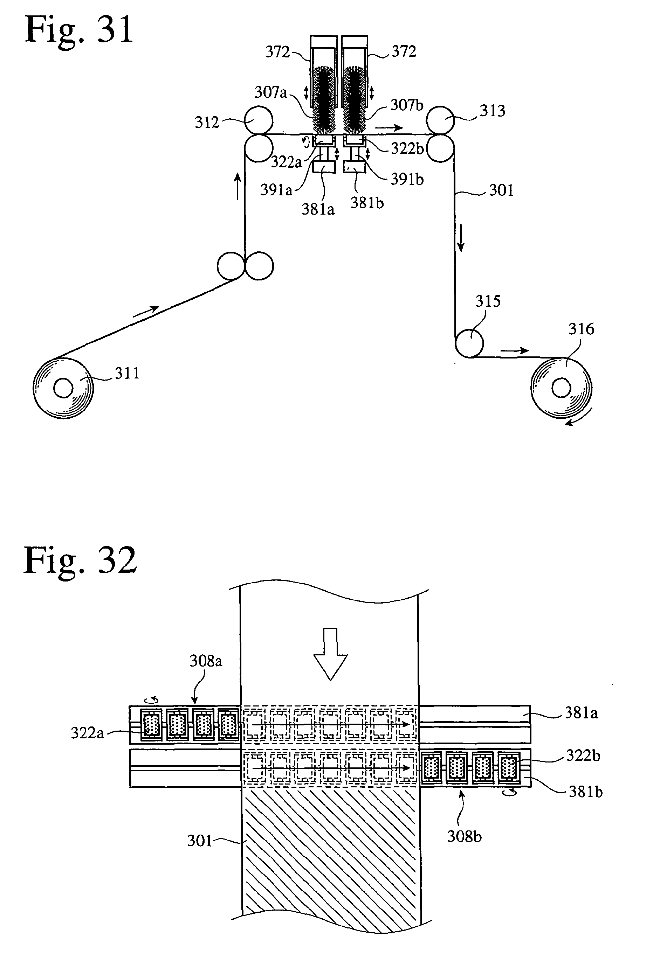

The endless pattern belt 306 is rotated in the width direction of the film 301 as shown in Figs. 30(a) and 31(b), such that small pattern rolls 321 are in sliding contact with the continuous film 301 to form linear scratches on the film 301 slantingly to the progressing direction of the film 301. The endless pattern belt 306 is preferably constituted by a larger number of the pattern rolls 321 at a high density. The longitudinal length and outer diameter of each small pattern rolls 321 are both preferably 5 to 10 cm.

The angle of the slanting linear scratches to the progressing direction of the film can be changed by properly adjusting the peripheral speed of the endless pattern belt 306 and the speed of the film 301. The peripheral speed of the endless pattern belt 306 is usually 1 to 100 m/minute. Small pattern rolls 321 are rotated in an opposite direction to the progressing direction of the endless pattern belt 306 on the roll-sliding surface at a peripheral speed of 1 to 50 m/minute as in the case of the pattern roll 302 described in (I) above.

The endless brush 307 is preferably rotated, such that the direction of the hairs 371 moving in sliding contact with the film 301 is opposite to the direction of the endless pattern belt 306 moving in sliding contact with the film 301. Thus, the endless brush 307 and the endless pattern belt 306 are rotated in the same direction. The hairs 371 of the endless brush 307 are preferably as long as 4 to 8 cm. The preferred requirements of the hairs 371 of the endless brush 307 concerning a bending recovery ratio, a diameter, a density on the brush-sliding surface, a tip shape and a material are the same as those of the rotatable roll brush 305 described in (I) above. The pressure of the endless brush 307 on the brush-sliding surface may be 1 to 490 kPa (0.01 to 5 kgf/cm²), the same as that of the rotatable roll brush 305 described in (I) above. The pressure for forcing the endless brush 307 to come into sliding contact with the film 301 may be controlled by properly adjusting the vertical position of the endless brush 307 by rotating a height-controlling knob 373. The peripheral speed of the endless brush 307 is preferably 1 to 50 m/minute. The peripheral speed of the endless brush 307 may be controlled by properly adjusting the rotation speed of a motor 374.

The endless pattern belt 306 and the endless brush 307 are preferably longer than the width of the film 301 in their progressing directions, such that the entire film 301 in the width direction are in sliding contact with the endless pattern belt 306 and the endless brush 307.

Fig. 31 shows another example of an apparatus for providing the film 301 with linear scratches slanting relative to the progressing direction. The same reference numerals are assigned to the same members or portions as in Fig. 24. The apparatus shown in Fig. 31 comprises a roll train 308a comprising a lot of small pattern rolls 322a mounted to a guide rail (support) 381a in parallel, and a roll train 308b comprising a lot of small pattern rolls 322b mounted to a guide rail (support) 381b in parallel, as means for forming linear scratches, as shown in Fig. 32.

Support shafts 391a and 391b supporting the pattern rolls 322a and 322b are movable up and down, and the roll trains 308a and 308b are movable straight along the guide rails 381a and 381b, respectively, in the width direction of the film 301. The guide means comprising the support shafts 391a and 391b movable up and down and the guide rails 381a and 381b can independently move the roll trains 308a and 308b in the width direction of the film 301. Accordingly, the roll trains 308a and 308b move from one end of the film 301 to the other end thereof in sliding contact with the film 301, and then separate from the film 301 and return to the original position, and this cycle is repeated. During this cycle, the movement of the roll trains 308a and 308b is controlled such that any of the roll trains is always in sliding contact with the entire width of the film 301, thereby forming linear scratches on the film slantingly to its progressing direction. As the guide means, instead of making the support shafts 391a and 39 1 b not movable up and down relative to the guide rails 381a and 381b, the guide rails 3 81 a and 381b may move up and down.

The longitudinal length and outer diameter of each pattern roll 322a, 322b may be about 5 to 10 cm. Intervals between the adjacent pattern rolls 322a, 322b are preferably narrower than at least the width of the pattern roll, such that the pattern rolls are disposed at a high density. Each roll train 308a, 308b is longer than the width of the film 301.

The apparatus shown in Fig. 31 comprises the same endless brushes 307a and 307b as those in the apparatus shown in Fig. 29 as film-pressing means, and the endless brushes 307a and 307b are opposing the roll trains 308a and 308b in parallel via the film 301. Support members 372, 372 supporting the endless brushes 307a and 307b are movable up and down. Accordingly, the vertical movement of the endless brush 307a is controlled such that both the endless brush 307a and the roll train 308a are brought into sliding contact with the film 301 simultaneously, and the vertical movement of the endless brush 307b is controlled such that both the endless brush 307b and the roll train 308b are brought into sliding contact with the film 301 simultaneously. Thus, a constant contact force is always applied to the roll-sliding surface.

The endless brushes 307a and 307b are preferably rotated such that the moving direction of their hairs in sliding contact with the film 301 is opposite to the moving direction of the roll trains 308a and 308b in sliding contact with the film 301. The preferred requirements of the hairs of the endless brushes 307a and 307b concerning a bending recovery ratio, a diameter, a length, a density on the brush-sliding surface, a tip shape and a material, and the preferred requirements of the endless brushes 307a and 307b concerning a pressure on the brush-sliding surface, and a peripheral speed may be the same as those of the endless brush 307 in the apparatus shown in Fig. 29.

The angle of the slanting linear scratches to the progressing direction of the film may be changed by properly adjusting the speed of the roll trains 308a and 308b in sliding contact with the film 301 and the moving speed of the film 301. The pattern rolls 322a and 322b are rotated in an opposite direction to the moving direction of the roll trains 308a and 308b on the roll-sliding surface. Their peripheral speed may be the same as that of the pattern rolls 302 described in (I) above.

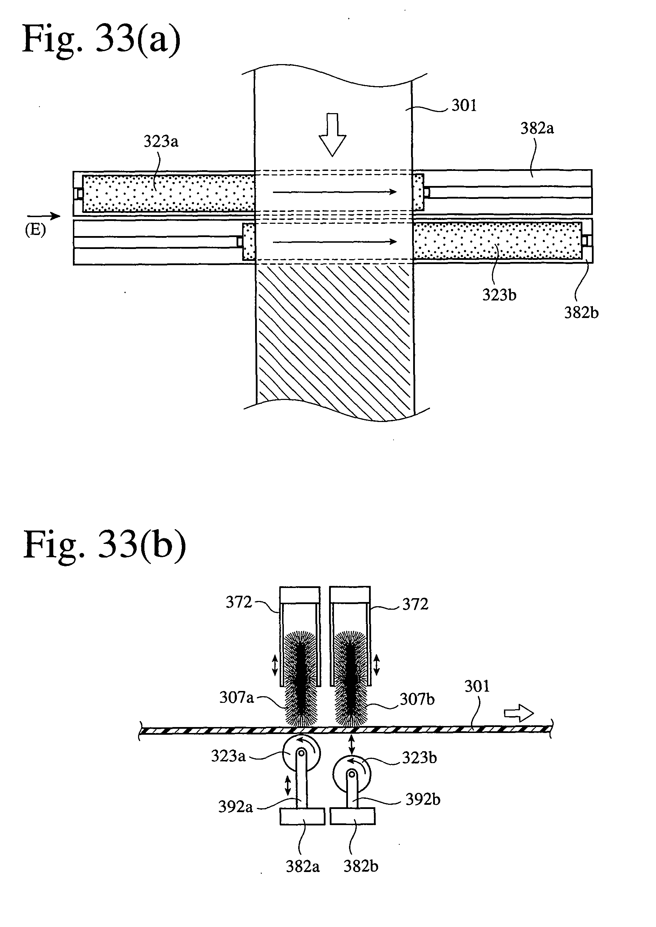

Figs. 33(a) and 33(b) show another example of an apparatus for forming linear scratches slanting relative to the progressing direction of the film 301. In this embodiment, two pattern rolls 323a and 323b each having a larger longitudinal length than the width of the film 301 are disposed in parallel in two rows in the progressing direction of the film 301. The longitudinal length of the pattern rolls 323a and 323b is preferably 2 times the width of the film 301 or more.

Support shafts 392a and 392b supporting the pattern rolls 323a and 323b are movable up and down, and the pattern rolls 323a and 323b are movable straight along guide rails 382a and 382b in the width direction of the film 301. The pattern rolls 323a and 323b can move independently in the width direction of the film 301 by a guide means comprising the 392a and 392b movable up and down and the guide rails 382a and 482b. Accordingly, the pattern rolls 323a and 323b are moved from one end of the film 301 to the other end thereof in sliding contact with the film 301, and then separate from the film 301 and return to the original position, and this cycle is repeated. During the cycle, the movement of the pattern rolls 323a and 323b can be controlled such that any of the pattern rolls are always in sliding contact with the entire width of the film 301, thereby forming linear scratches slanting to the progressing direction of the film. The angle of the slanting linear scratches to the progressing direction of the film can be changed by properly adjusting the sliding speed of the pattern rolls 323a and 323b and the moving speed of the film 301.

The apparatus shown in Fig. 33 comprises, as film-pressing means, endless brushes 307a and 307b movable up and down and opposing the pattern rolls 323a and 323b in parallel via the film 301 as in the apparatus shown in Fig. 31.

Though the apparatuses shown in Figs. 29 to 33 comprise the endless brushes as film-pressing means, they may comprise the air-blowing means described in (I) above.

### (III) Formation of linear scratches on film in width direction

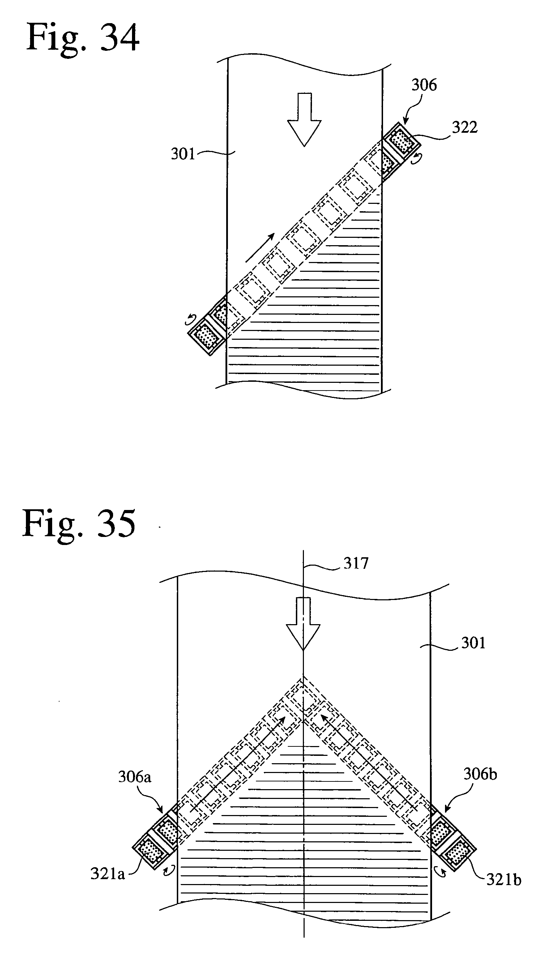

Fig. 34 shows one example of an apparatus for forming linear scratches on the film 301 in a width direction thereof. The same reference numerals are assigned to the same members or portions as in Fig. 29. The apparatus shown in Fig. 34 is the same as those shown in Figs. 29 and 30 except that an endless pattern belt 306 is disposed slantingly to the progressing direction of a film (no endless brush shown). Using an apparatus having the structure shown in Fig. 34, linear scratches can be formed on the film 301 in the width direction thereof, properly adjusting operation conditions such as the progressing speed of the film 301, the angle of the endless pattern belt 306 to progressing direction of the film 301, the peripheral speed of the pattern belt 306, etc.

Fig. 35 shows another example of an apparatus for forming linear scratches on the film 301 in a width direction. In this embodiment, an endless pattern belt 306a comprising a lot of small pattern rolls 321a and an endless pattern belt 306b comprising a lot of small pattern rolls 321b connected to each other are disposed symmetrically relative to the center line 317 of the film 301 as a symmetry axis and slantingly to the progressing direction of the film. The same endless brushes (not shown) as in the apparatus shown in Fig. 29 are preferably disposed as film-pressing means in parallel with endless pattern belts 306a and 306b via a film 301.

Using the apparatus having the structure shown in Fig. 35, linear scratches can be formed on the film 301 in the width direction thereof, by properly adjusting operation conditions such as the progressing speed of the film 301, the angle of the endless pattern belts 306a and 306b to the center line 317 of the film 301, the peripheral speed of the endless pattern belts 306a and 306b, etc.

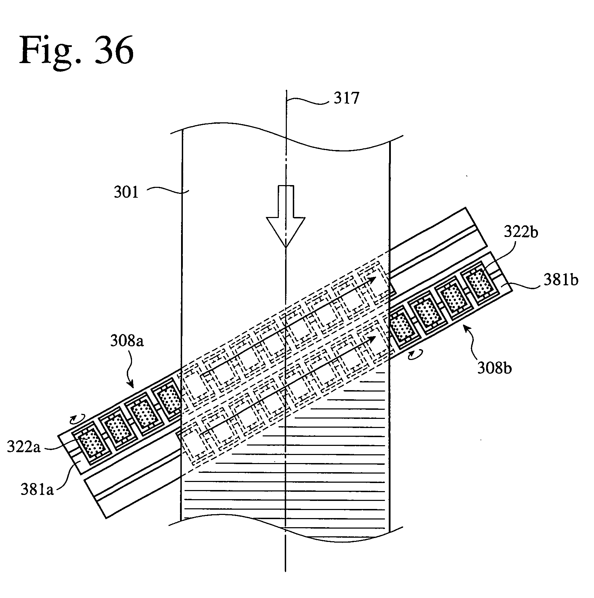

Fig. 36 shows another example of an apparatus for forming linear scratches on the film 301 in a width direction thereof. The apparatus shown in Fig. 36 is the same as the apparatus shown in Fig. 32, except that the same roll trains 308a and 308b as shown in Fig. 32 are disposed slantingly to the width direction of the film 301 (no endless brushes shown). Using the apparatus having the structure shown in Fig. 36, linear scratches can be formed on the film 301 in the width direction thereof, by properly adjusting operation conditions such as the progressing speed of the film 301, the angle of the roll trains 308a and 308b relative to the progressing direction of the film 301, the sliding speed of the roll trains 308a and 308b, etc.

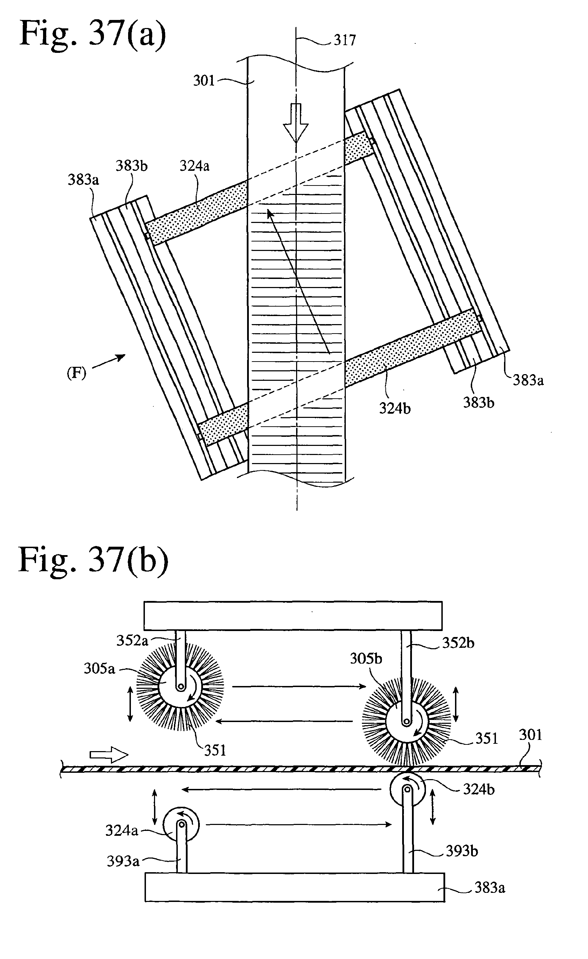

Figs. 37(a) and 37(b) show another example of an apparatus for forming linear scratches on the film 301 in a width direction. Fig. 37(b) shows a left side surface of the apparatus shown in Fig. 37(a) (taken from the direction F in Fig. 37(a)). The apparatus of this embodiment comprises two pattern rolls 324a and 324b each having a longitudinal axis slanting to the progressing direction of the film 301. The longitudinal length of each pattern roll 324a and 324b is preferably at least 2 times the width of the film 301 or more.

Support shafts 393a and 393b supporting the pattern rolls 324a and 324b are movable up and down, and the pattern rolls 324a and 324b are movable straight along guide rails 383a and 383b at a predetermined angle relative to the center line 317 of the film 301. The pattern rolls 324a and 324b can move independently at a predetermined angle relative to the center line 317 of the film 301, by a guide means comprising 393a and 393b movable up and down and the guide rails 383a and 383b. Because the pattern roll 324b is longer than the pattern roll 324a in a longitudinal direction, the pattern rolls 324a and 324b can cross each other during moving in opposite directions. The pattern rolls 324a and 324b thus move from one end of the film 301 to the other end thereof in sliding contact with the film 301, and separate from the film 301 and return to the original position, and this cycle is repeated. Linear scratches can be formed on the film in a width direction thereof, by controlling the movement of the pattern rolls 324a and 324b such that any of the pattern rolls is always in sliding contact with the entire width of the film 301.

As shown in Fig. 37(b), rotatable roll brushes 305a and 305b are supported as film-pressing means by the support shafts 352a and 352b, which are movable up and down and linearly, and move as the pattern rolls 383a and 383b move along the sliding surface of the film 301. One of the rotatable roll brushes 305a and 305b is longer than the other in a longitudinal directions, so that they can cross each other during moving in opposite directions. A contact force is thus always applied to the film 401 in sliding contact with the pattern roll 383a or 383b. The preferred requirements of the hairs 351 of the rotatable roll brushes 305a and 305b concerning a bending recovery ratio, a diameter, a length, a density on the brush-sliding surface, a tip shape and a material may be the same such as those of the rotatable roll brush 305 described in (I) above.

In the apparatuses shown in Figs. 34 to 37, linear scratches can be formed on the film 301 slantingly to a progressing direction thereof, by properly adjusting operation conditions, etc. Though the apparatuses shown in Figs. 34 to 37 comprise the endless brushes as film-pressing means, they may comprise the air-blowing means described in (I) above.

In the easy-to-straight-tear film produced by the above-described method, the above linear scratches are preferably as deep as 1 to 40% of the film thickness, to meet both requirements of high film strength and good easy-to-straight-tear characteristics. The linear scratches are preferably as deep as 0.1 to 10 µm and as wide as 0.1 to 10 µm, and the intervals of the linear scratches are preferably 10 to 200 µm.

### [7] Formation of fine pores in film

To provide the shape-memory PBT laminate film with easy-to-straight-tear characteristics, at least one of the PBT film, the rigid film and the sealant film may be entirely provided with fine penetrating pores. The fine penetrating pores are particularly preferably formed in the sealant film. The fine pores have an average opening diameter of 0.5 to 100 µm, and a distribution density of about 500/cm² or more. When the distribution density of the fine pores is less than about 500/cm², easy tearing is insufficient. Incidentally, the upper limit of the density of the fine pores is not particularly restricted as long as technically possible.

To form the fine pores on the film, the methods disclosed in Japanese patent 2,071,842 and JP 2002-059487 A, for instance, may be used. Using the method disclosed in Japanese patent 2,071,842, for instance, a film is caused to pass between a first roll having a lot of particles with sharp edges and a Mohs' hardness of 5 or more on the surface (the same as the pattern roll 302 described in [7] above), and a second roll having a smooth surface, with pressure applied to the film passing between the rolls adjusted uniform over the entire surface of the film in contact with the roll, to form a lot of fine pores described above on the film with sharp edges of a lot of particles on the first roll surface. The second roll may be, for instance, an iron roll, an iron roll plated with Ni, Cr, etc., a stainless steel roll, a specialty steel roll, etc.

### [8] Vapor deposition of ceramics or metals

To improve the gas barrier of the shape-memory PBT laminate film, the PBT film may be vapor-deposited with metals, ceramics, etc., or coated with resins. Specific examples of the ceramics for vapor deposition include silica, alumina, etc. The vapor deposition of metals, ceramics, etc. may be carried out by known methods.

### [9] Functional polybutylene terephthalate film

The formation of linear scratches and/or fine pores can provide the PBT film of the present invention with further improved functions for wrapping bags.

### (II) Easy-to-straight-tear polybutylene terephthalate film

The easy-to-straight-tear PBT film has a lot of substantially parallel linear scratches formed on at least one surface thereof by the method described in the above [6]. It can be easily torn straight from any point along the linear scratches, because of the characteristics of easily tearing straight in one direction regardless of the orientation of the original film. A wrapping bag formed from the easy-to-straight-tear PBT film can be opened in a strip shape without tapering while keeping a constant width. In addition, the easy-to-straight-tear PBT film has excellent gas barrier, because the linear scratches do not penetrate the film.

The depth of the linear scratches of the easy-to-straight-tear PBT film is preferably 1 to 40% of the film thickness, to meet both requirements of high film strength and good easy-to-straight-tear characteristics. The linear scratches are preferably as deep as 0.1 to 10 µm and as wide as 0.1 to 10 µm, and the intervals of the linear scratches are preferably 10 to 200 µm.

The thickness of the easy-to-straight-tear PBT film is preferably about 5 to 50 µm, more preferably about 10 to 20 µm, for instance, about 12 µm. With the thickness of about 5 to 50 µm, sufficient odor retention and gas barrier as well as good gloss and printability are obtained.

The easy-to-straight-tear PBT film may be vapor-deposited with metals, ceramics, etc., or coated with resins. Specific examples of the ceramics for vapor deposition include silica, alumina, etc. The vapor deposition of such ceramics provides the easy-to-straight-tear PBT film with improved gas barrier. The vapor deposition of metals, ceramics, etc. may be carried out by known methods. The metals, ceramics, etc. may be vapor-deposited on the film with or without linear scratches. Because the PBT film obtained by the production method of the present invention has a small thermal shrinkage ratio, a stable vapor deposition layer can be formed thereon.

The easy-to-straight-tear PBT film may be a laminate film having a layer of common polyolefins and special polyolefins. Specifically, they are low-density polyethylene (LDPE), medium-density polyethylene (MDPE), high-density polyethylene (HDPE), cast polypropylene (CPP), linear-low-density polyethylene (LLDPE), very-low-density polyethylene (VLDPE), ethylene-vinyl acetate copolymers (EVA), ethylene-acrylic acid copolymers (EAA), ethylene methacrylic acid copolymers (EMAA), ethylene ethyl acrylate copolymers (EEA), ethylene-methylmethacrylate copolymers (EMMA), ethylene-methyl acrylate copolymers (EMA), ionomers (IO), etc. To further improve moisture resistance and gas barrier, the laminate film preferably comprises an intermediate layer formed by an aluminum foil, a silica-deposited polyethylene terephthalate film, an alumina-deposited polyethylene terephthalate film, etc.

In the production of the laminate film, the PBT film may be formed with linear scratches and then laminated with another film with or without the above intermediate layer, as described below. The lamination is carried out by extrusion with an adhesive layer between the layers. The adhesive layer is preferably made of polyethylene.

The easy-to-straight-tear PBT film having linear scratches formed in a progressing direction thereof (longitudinal direction) may be used for wrapping bags for stick cookies. The wrapping bags formed by the easy-to-straight-tear PBT film having linear scratches in a longitudinal direction can be opened in a strip shape without tapering while keeping a constant width, the cookies are not damaged. Though wrappings formed by OPP films for rice balls, etc. are provided with cutting tapes (tear tapes) in alignment with the opening width, the easy-to-straight-tear PBT film having linear scratches in a longitudinal direction does not need a tear tape, because it can be opened while keeping the opening width.

The easy-to-straight-tear PBT film having linear scratches slanting to a progressing direction thereof may be used for wrapping bags of powdery medicine, seasonings for lunch boxes, etc. A wrapping bag formed by the easy-to-straight-tear PBT film having slanting linear scratches can be easily torn slantingly in a corner thereof.

The easy-to-straight-tear PBT film having linear scratches in a width direction (transverse direction) may be used for stick-shaped wrapping bags of powdery instant food, etc. Using the easy-to-straight-tear PBT film having linear scratches in a transverse direction, stick-shaped wrapping bags having increasing demand can be produced at a low cost.

The easy-to-straight-tear PBT film can be uniformly formed with a lot of fine penetrating pores and/or a lot of fine non-penetrating pores by the method described in [7] above, to further improve its easy-to-straight-tear characteristics, and to impart easy tearing characteristics in other directions than the direction of the linear scratches.

### (II) Porous polybutylene terephthalate film

The porous PBT film of the present invention has a lot of fine penetrating pores and/or a lot of fine non-penetrating pores uniformly formed by the method described in [7] above. Accordingly, the porous PBT film has good twistability and twist retention, without suffering from tearing when twisted. The fine pores preferably have an average opening diameter of 0.5 to 100 µm and a density of about 500/cm² or more. When the density of the fine pores is less than about 500/cm², the twist retention is insufficient.

The porous PBT films are useful as package sheets provided with good tearability and twist retention as well as practical properties without losing heat resistance, odor retention, water resistance, etc., excellent properties of the PBT film. When gas barrier is required for package sheets formed by the porous PBT film, those having non-penetrating fine pores should be used.

Though the present invention has been explained above referring to the drawings, the present invention is not restricted thereto, and various modifications may be added to the present invention unless changing the spirit thereof.

The present invention will be explained in more detail referring to Examples below without intention of restricting the present invention thereto.

### Example 1

Using the apparatus shown in Fig. 1, a PBT film was produced by an air-cooled inflation method. A PBT resin having a melting point of 220°C and intrinsic viscosity of 1.2 ["Toraycon 1200S" (tradename), commercially available from Toray Industries, Inc.] was charged into a single-screw extruder (screw diameter: 50 mm, extrusion rate: 50 kg/hr), and melt-blended at 210°C to prepare a molten resin in the extruder. The molten resin was then extruded from an extruder outlet at a resin-extruding temperature of 210°C and at a resin-extruding pressure of 11.8 MPa (120 kgf/cm²), so that a tube of the molten resin was extruded from a die head (die diameter: 150 mm, die lip gap: 0.9 mm). The extruded molten resin tube was inflated at a blow-up ratio of 3.6, and (1) slowly cooled to 185°C by ejecting warm air (30°C) onto a neck portion of the bubble from the first hot-air-blowing means, (2) slowly cooled to 160°C by ejecting warm air (30°C) onto an inflating portion of the bubble from the second hot-air-blowing means, (3) slowly cooled to 125°C by ejecting warm air (50°C) onto a frost line region from the third hot-air-blowing means, and (4) taking it off at 20 m/minute while keeping the bubble region at 100°C, to form a PBT film. The cylindrical net surrounding the bubble region was made of nylon, and the cylindrical partition made of an acrylic resin was provided with warm air outlets at two positions in an upper side wall thereof. A rod heater was disposed inside the cylindrical partition, and a rectifying plate having an opening ratio of 60% was disposed inside the cylindrical partition in an upper portion thereof.

### Example 2

A PBT film was produced in the same manner as in Example 1 except that the resin-extruding temperature was 205°C, and that the resin-extruding pressure was 12.7 MPa (130 kgf/cm²).

### Example 3

A PBT film was produced in the same manner as in Example 1 except that the resin-extruding temperature was 215°C, and that the resin-extruding pressure was 10.8 MPa (110 kgf/cm²).

### Comparative Example 1

A PBT film was produced in the same manner as in Example 1 except that the resin-extruding temperature was 230°C, and that the resin-extruding pressure was 8.8 MPa (90 kgf/cm²).

### Comparative Example 2

A PBT film was produced in the same manner as in Comparative Example 1 except for using no rectifying plate.

The properties of the PBT films obtained in Examples 1 to 3 and Comparative Examples 1 and 2 were measured by the following methods. The results are shown in Table 1.
- Average thickness:: The thickness of the film was measured by a contact thickness meter at center and both ends in a width direction, each two points and thus six points in total, and the measured values were averaged.
- Thickness unevenness:: The thickness of the film was measured at center and both ends in a width direction, each two points and thus six points in total, and difference was calculated from the maximum and the minimum among the measured values.
- Tensile rupture strength:: The tensile rupture strength of a 10-mm-wide rectangular test piece was measured according to ASTM D882.
- Thermal shrinkage ratio:: The shrinkage ratio of a PBT film was measured in both MD and TD when exposed to 175°C for 10 minutes.
- Crystallinity:: Measured by an X-ray method.

**Table 1**

| Production Conditions | Ex. 1 | Ex. 2 | Ex. 3 | Com. Ex. 1 | Com Ex. 2 |
|---|---|---|---|---|---|
| PBT Resin⁽¹⁾ (Grade) | 1200S | 1200S | 1200S | 1200S | 1200S |
| Melting Point (°C) | 220 | 220 | 220 | 220 | 220 |
| Intrinsic Viscosity (IV) | 1.2 | 1.2 | 1.2 | 1.2 | 1.2 |
| Die Diameter (mm) | 150 | 150 | 150 | 150 | 150 |
| Die Lip Gap (mm) | 0.9 | 0.9 | 0.9 | 0.9 | 0.9 |
| Blow-Up Ratio | 3.6 | 3.6 | 3.6 | 3.6 | 3.6 |
| Resin-Extruding Temp. (°C) | 210 | 205 | 215 | 230 | 235 |
| Resin-Extruding Pressure (MPa) | 11.8 | 12.7 | 10.8 | 8.8 | 8.8 |

| Temperature (°C) | | | | | |
|---|---|---|---|---|---|
| In Neck Portion of Bubble | 185 | 185 | 185 | 185 | 185 |
| In Inflating Portion of Bubble | 160 | 160 | 160 | 160 | 160 |
| In Frost Line Region | 125 | 125 | 125 | 125 | 125 |
| In Bubble Region | 100 | 100 | 100 | 100 | 100 |
| Rectifying Plate | Yes | Yes | Yes | Yes | No |
| Take-Off Speed (m/minute) | 20 | 20 | 20 | 20 | 20 |
| Stability of Bubble | Good | Good | Good | Good | Poor |

| Properties | Ex. 1 | Ex. 2 | Ex. 3 | Com. Ex. 1 | Com. Ex. 2 |
|---|---|---|---|---|---|
| Average Thickness (µm) | 20 | 22 | 18 | 20 | - |
| Thickness Unevenness (µm) | ± 3 | ± 3 | ± 3 | ± 3 | - |
| Tensile Rupture Strength (gf/25 mm) MD TD | 2700 2500 | 2400 2300 | 2100 2000 | 1900 1800 | - - |
| Thermal Shrinkage Ratio (%) MD TD | 0 0.1 | 0.2 0.2 | 0.2 0.1 | 0.5 0.2 | - - |
| Crystallinity | 39.6 | 39.6 | 36.7 | <30 | - |
| Note: (1) "Toraycon" (tradename) commercially available from Toray Industries, Inc. | | | | | |

As shown in Table 1, the PBT films of Examples 1 to 3 produced by the method of the present invention had high crystallinity, excellent thickness uniformity and tensile rupture strength, and low thermal shrinkage ratios. In Examples 1 to 3, no lateral vibration occurred in the bubble during the formation of the PBT film, so that the bubble was always stable. On the other hand, because the resin-extruding temperature was the melting point of the PBT resin or higher in Comparative Example 1, the resultant PBT film had low crystallinity and poor tensile rupture strength. Because no rectifying plate was used in Comparative Example 2, lateral vibration occurred in the bubble during the formation of the film, so that the bubble was unstable.

## Claims

1. A method for producing a polybutylene terephthalate film by an air-cooled inflation method that inflates a tube of a molten polybutylene terephthalate resin extruded from an annular die by the injection of air, wherein a resin-extruding temperature is the melting point of said polybutylene terephthalate resin - 15°C to said melting point - 5°C; and wherein a resin-extruding pressure is 8.3 to 13.7 MPa.

2. The method for producing a polybutylene terephthalate film according to claim 1, wherein said polybutylene terephthalate resin has an intrinsic viscosity of 0.8 to 1.5.

3. The method for producing a polybutylene terephthalate film according to claim 1 or 2, wherein said annular die has a lip gap of 0.8 to 1.2 mm and a diameter of 120 to 250 mm; and wherein a blow-up ratio is 2.0 to 4.0.

4. The method for producing a polybutylene terephthalate film according to any one of claims 1 to 3, comprising the steps of (1) ejecting a warm air from a first hot-air-blowing means disposed near said annular die, to slowly cool a neck portion of said bubble to a temperature ranging from said melting point - 40°C to said melting point - 25°C; (2) ejecting a warm air from a second hot-air-blowing means disposed above said first hot-air-blowing means, to slowly cool an inflating portion of said bubble to a temperature ranging from said melting point - 70°C to said melting point - 40°C; (3) ejecting a warm air from a third hot-air-blowing means disposed above said second hot-air-blowing means, to slowly cool a frost line region of said bubble to a temperature ranging from said melting point - 130°C to said melting point - 90°C; and (4) isolating said bubble region from an ambient atmosphere, and causing the warm air ejected from said first to third hot-air-blowing means to flow upward along an outer surface of said bubble region, by a partition disposed with a gap around a bubble region above said frost line.

5. The method for producing a polybutylene terephthalate film according to claim 4, wherein said partition is provided with pluralities of warm air exits, and a rectifying plate is disposed inside said partition, so that the warm air ejected from said first to third hot-air-blowing means is rectified.

6. The method for producing a polybutylene terephthalate film according to claim 4 or 5, wherein the inflating portion of said bubble is slowly cooled by the warm air ejected from said second hot-air-blowing means while keeping an amorphous state.

7. The method for producing a polybutylene terephthalate film according to any one of claims 4 to 6, wherein said partition comprises a heating means, to keep said bubble region at a temperature ranging from the glass transition temperature Tg of said polybutylene terephthalate resin to Tg + 65°C.

8. The method for producing a polybutylene terephthalate film according to any one of claims 4 to 7, wherein said bubble region is surrounded by a cylindrical net to prevent the lateral vibration of said bubble.

9. The method for producing a polybutylene terephthalate film according to any one of claims 4 to 8, wherein the temperature of the warm air ejected from said first and second hot-air-blowing means is 25 to 50°C, and the temperature of the warm air ejected from said third hot-air-blowing means is the glass transition temperature Tg of said polybutylene terephthalate resin to Tg + 65 °C.

10. The method for producing a polybutylene terephthalate film according to any one of claims 1 to 9, wherein the air-cooled inflation film is further subjected to a monoaxial or biaxial cold orientation.

11. The method for producing a polybutylene terephthalate film according to claim 10, wherein said cold orientation is conducted at a temperature ranging from the glass transition temperature Tg of said polybutylene terephthalate resin to Tg + 60°C.

12. The method for producing a polybutylene terephthalate film according to claim 10 or 11, wherein the formation of the tubular film by an air-cooled inflation method and said monoaxial or biaxial cold orientation are continuously conducted.

13. The method for producing a polybutylene terephthalate film according to any one of claims 10 to 12, wherein the tubular film is subjected to a monoaxial or biaxial cold orientation after being bisected.

14. The method for producing a polybutylene terephthalate film according to any one of claims 10 to 13, wherein the formation of the tubular film by an air-cooled inflation method, the bisection of said tubular film and said monoaxial or biaxial cold orientation are continuously conducted.

15. A polybutylene terephthalate film obtained by the production method recited in any one of claims 1 to 9, which has a crystallinity of 35 to 40%, and a thermal shrinkage ratio of 0.4% or less in a longitudinal direction and in a transverse direction.

16. An apparatus comprising (a) an annular die for extruding a molten polybutylene terephthalate resin in a tubular shape; (b) a means for injecting air into the resultant polybutylene terephthalate tube to form a bubble; (c) a first hot-air-blowing means disposed near said annular die for slowly cooling a neck portion of said bubble; (d) a second hot-air-blowing means disposed above said first hot-air-blowing means for slowly cooling an inflating portion of said bubble; (e) a third hot-air-blowing means disposed above said second hot-air-blowing means for slowly cooling a frost line region of said bubble; and (f) a partition disposed above said third hot-air-blowing means and around a bubble region above said frost line for isolating said bubble region from an ambient atmosphere, and for causing the warm air ejected from said first to third hot-air-blowing means to flow upward along an outer surface of said bubble region, said partition having pluralities of warm air exits.

17. The apparatus for producing a polybutylene terephthalate film according to claim 16, wherein a rectifying plate is disposed inside said partition.

18. The apparatus for producing a polybutylene terephthalate film according to claim 16 or 17, wherein a heating means is disposed inside said partition.

19. The apparatus for producing a polybutylene terephthalate film according to any one of claims 16 to 18, wherein a cylindrical net surrounding said bubble region is disposed inside said partition to prevent the lateral vibration of said bubble.

20. The apparatus for producing a polybutylene terephthalate film according to any one of claims 16 to 19, wherein an inflating portion of said bubble in an amorphous state is slowly cooled by the warm air ejected from said second hot-air-blowing means.

21. The apparatus for producing a polybutylene terephthalate film according to any one of claims 16 to 20, further comprising a means for cold-orienting the resultant air-cooled inflation film.

22. The apparatus for producing a polybutylene terephthalate film according to claim 21, wherein an air-cooled inflation means comprising said annular die, said air-injecting means, said first hot-air-blowing means, said second hot-air-blowing means, said third hot-air-blowing means and said partition, and said cold orientation means are disposed along the flow of said film continuously.

23. The apparatus for producing a polybutylene terephthalate film according to claim 22, which comprises nip rolls for taking off the tubular film formed by said air-cooled inflation means, and further (1) an edge position control unit for keeping the edge positions of said tubular film flattened by said nip rolls from changing, and (2) a cutting means for bisecting said tubular film with its edge positions kept unchanged, between said air-cooled inflation means and said cold orientation means.

24. A shape-memory polybutylene terephthalate laminate film comprising the polybutylene terephthalate film obtained by the production method recited in any one of claims 1 to 9, and another film or film laminate, which comprises at least one selected from the group consisting of a paper sheet, another resin film and a metal foil, said laminate film being provided with the memory of a first shape given in a predetermined temperature range.

25. The shape-memory polybutylene terephthalate laminate film according to claim 24, which undergoes deformation to a second shape in a temperature range different from said predetermined temperature range.

26. The shape-memory polybutylene terephthalate laminate film according to claim 25, which substantially returns from said second shape to said first shape when exposed to a temperature equal to or higher than the temperature at which said first shape is memorized.

27. The shape-memory polybutylene terephthalate laminate film according to claim 26, wherein the temperature for returning to said first shape is the glass transition temperature of said polybutylene terephthalate or lower.

28. The shape-memory polybutylene terephthalate laminate film according to claim 27, wherein the temperature for returning to said first shape is 15 to 25°C.

29. The shape-memory polybutylene terephthalate laminate film according to claim 26, wherein the temperature for returning to said first shape is higher than the glass transition temperature of said polybutylene terephthalate and lower than the melting point of said polybutylene terephthalate.

30. The shape-memory polybutylene terephthalate laminate film according to claim 29, wherein the temperature for returning to said first shape is 75 to 100°C.

31. The shape-memory polybutylene terephthalate laminate film according to any one of claims 25 to 30, wherein said first shape is a curled shape, and said second shape is substantially a flat shape or an oppositely curled shape.

32. The shape-memory polybutylene terephthalate laminate film according to any one of claims 24 to 31, wherein at least one entire surface of said polybutylene terephthalate film is provided with a lot of substantially parallel linear scratches, so that said laminate film can be torn substantially straight along said linear scratches from any position.

33. The shape-memory polybutylene terephthalate laminate film according to claim 32, wherein the depth of said linear scratches is 1 to 40% of the thickness of said polybutylene terephthalate film.

34. The shape-memory polybutylene terephthalate laminate film according to claim 32 or 33, wherein the depth of said linear scratches is 0.1 to 10 µm, the width of said linear scratches is 0.1 to 10 µm, and intervals between said linear scratches are 10 to 200 µm.

35. The shape-memory polybutylene terephthalate laminate film according to any one of claims 32 to 34, wherein at least one surface of said polybutylene terephthalate film is vapor-deposited with a ceramic or a metal.

36. The shape-memory polybutylene terephthalate laminate film according to any one of claims 24 to 35, which has a layer structure comprising said polybutylene terephthalate film, said paper sheet and a sealant film in this order.

37. The shape-memory polybutylene terephthalate laminate film according to any one of claims 24 to 35, which has a layer structure comprising said polybutylene terephthalate film, said paper sheet, a rigid film and a sealant film in this order.

38. The shape-memory polybutylene terephthalate laminate film according to any one of claims 24 to 35, which has a layer structure comprising said polybutylene terephthalate film, a rigid film and a sealant film in this order.

39. The shape-memory polybutylene terephthalate laminate film according to any one of claims 26 to 38, which has a light-screening ink layer on a surface of said polybutylene terephthalate film on the side of said paper sheet, or on a surface of said rigid film on the side of said sealant film.

40. A wrapping sheet formed by the shape-memory polybutylene terephthalate laminate film recited in any one of claims 24 to 39.

41. A container lid formed by the shape-memory polybutylene terephthalate laminate film recited in any one of claims 24 to 39.
